# EUROPEAN PATENT APPLICATION

(11) **EP 4 694 373 A1**
(43) Date of publication of application: **11.02.2026**
(21) Application number: 24784798.1
(22) Date of filing: 27.03.2024
(51) Int. Cl.: H04W 52/02, H04W 72/231, H04W 72/232, H04W 72/0446

(54) **WIRELESS TERMINAL, RADIO ACCESS NETWORK NODE, AND METHODS FOR SAME**

(30) Priority: 06.04.2023 JP 2023062268
(71) Applicant: NEC Corporation, 108-8001 Tokyo (JP)
(72) Inventor: HAYASHI Satoaki, Tokyo 108-8001 (JP); CHEN Yuhua, Tokyo 108-8001 (JP)
(74) Representative: Mathys & Squire
(86) International application number: PCT/JP2024/012170
(87) International publication number: WO 2024/210009

(57) **Abstract**

A radio terminal is configured to receive Layer 1 or Layer 2 (L1/L2) signaling from a network that triggers the extension of the ON duration of the current cell DTX or cell DRX (cell DTX/DRX) cycle. The L1/L2 signaling indicates one or both of the length of the cell DTX/DRX extended ON duration and an offset that defines the start point of the cell DTX/DRX extended ON duration. The radio terminal extends the ON duration of the current cell DTX/DRX cycle based on the L1/L2 signaling. For example, this contributes to providing details of the L1/L2 signaling that instructs the extension of the ON duration for cell DTX/DRX.

## Description

### Technical Field

The present disclosure relates to radio communication networks, and, more specifically, to various technologies that contribute to improving network energy saving, either directly or indirectly.

### Background Art

The 3rd Generation Partnership Project (3GPP (registered trademark)) Release 15 and subsequent releases specify 5G New Radio (NR) User Equipment (UE) power saving schemes. These UE power saving schemes include discontinuous reception (DRX) performed by a UE in Radio Resource Control (RRC)_CONNECTED mode (see, for example, Non-Patent Literature 1-3). In this description, DRX performed by a UE in RRC_CONNECTED mode is referred to as connected mode DRX (CDRX), to distinguish it from cell discontinuous transmission (DTX) and cell DRX, which are described below.

Clause 11 of Non-Patent Literature 1 states that the Physical Downlink Control Channel (PDCCH) monitoring activity of a UE in RRC_CONNECTED mode is governed by CDRX. If CDRX is configured, the UE does not need to continuously monitor a PDCCH. CDRX is characterized by its on-duration, inactivity timer, retransmission timer, cycle, and active time. The on-duration is the duration that the UE waits for, after waking up, to receive PDCCHs. If the UE successfully decodes a PDCCH, it stays awake and starts the inactivity timer. The inactivity timer is the duration that the UE waits to successfully decode a next PDCCH from the last successful decoding of a PDCCH. If PDCCH decoding fails until the inactive timer expires, the UE can return to sleep. The retransmission timer is the duration during which the UE must be awake to receive retransmissions. The DRX cycle specifies a periodic repetition of the on-duration, followed by a period of possible inactivity. The active time is the total duration during which the UE monitors a PDCCH. The active time includes the on-duration within a DRX cycle, the time during which the UE performs continuous reception while the inactivity timer has not expired, and the time during which the UE performs continuous reception while waiting for a retransmission opportunity.

Clause 5.7 of Non-Patent Literature 2 describes the CDRX-related timers and the details of their start and stop conditions. CDRX is controlled by RRC. The CDRX-related parameters provided to the UE from the network by the RRC configuration (DRX-Config) include the following: drx-onDurationTimer, drx-SlotOffset, drx-InactivityTimer, drx-RetransmissionTimerDL (per DL HARQ process except for the broadcast process), drx-RetransmissionTimerUL (per UL HARQ process),drx-LongCycleStartOffset, drx-ShortCycle (optional), drx-ShortCycleTimer (optional), drx-HARQ-RTT-TimerDL (per DL HARQ process except for the broadcast process), and drx-HARQ-RTT-TimerUL (per UL HARQ process). Multiple serving cells of a Medium Access Control (MAC) entity of the UE may be configured by the RRC with two CDRX groups having different CDRX parameters. Although the term "DRX group" is used in the 3GPP specification, this description uses the term "CDRX group" for clarity. If two CDRX groups are configured, each serving cell is uniquely assigned to one of the two groups. The CDRX parameters that are configured individually for each CDRX group are drx-onDurationTimer and drx-InactivityTimer. On the other hand, the CDRX parameters common to the multiple CDRX groups are drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

If CDRX is configured, the active time for multiple serving cells in a CDRX group includes, among other time periods, the time while:
- the drx-onDurationTimer or drx-InactivityTimer configured for the CDRX group is running; or
- the drx-RetransmissionTimerDL or drx-RetransmissionTimerUL is running on any of the serving cells in the CDRX group; or
- a scheduling request is sent on a Physical Uplink Control Channel (PUCCH) and is pending; or
- a PDCCH indicating a new transmission to the Cell Radio Network Temporary Identifier (C-RNTI) of the MAC entity has not been received after successful reception of a random access response to a random access preamble not selected by the MAC entity.

Non-Patent Literature 3 specifies that an RRC configuration related to CDRX (i.e., DRX-Config) is provided to the UE by the network via a UE-dedicated RRC message, specifically an RRCReconfiguration message. The DRX-Config is contained in a MAC-CellGroupConfig within a CellGroupConfig carried by an RRCReconfiguration message.

The 3GPP is currently discussing network energy saving for 3GPP Release 18 (see, for example, Non-Patent Literature 4-10). Network energy saving is abbreviated as NES. As described in Non-Patent Literature 4 and 5, there are various technologies for improving network energy saving, including cell DTX and DRX. For example, the network may provide a mechanism for notifying UEs in a cell whether the cell is in an inactive state. During cell DTX or cell DRX, i.e., while the cell is in an inactive state, the cell may not transmit or receive, or it may only perform restricted transmission or reception. For instance, the cell does not need to transmit or receive some periodic signals and channels, such as cell common channels and signals and UE-specific signals and channels.

The term "cell DTX/DRX" may be used to refer to either or both of cell DTX and cell DRX. Also, although the definitions of terms for cell DTX/DRX are not clear at present, in this description, the terms "cell DTX ON duration," "cell DTX off duration," "cell DRX ON duration," and "cell DRX off duration" are used with respect to cell DTX/DRX. The cell DTX/DRX ON duration refers to the duration, time, or period during which a cell is active and can transmit and receive all necessary cell common channels and signals, as well as UE-specific signals and channels. In contrast, the cell DTX/DRX off duration refers to the duration, time, or period during which the cell is in an inactive state for NES and does not transmit or receive, or is allowed to maintain only restricted transmission or reception. The cell DTX/DRX ON duration may also be referred to as the cell DTX/DRX ON time or period, or the cell DTX/DRX active time, period, or duration. The cell DTX/DRX off duration may also be referred to as the cell DTX/DRX off time or off period, or the cell DTX/DRX inactive (or non-active) time, period, or duration.

Clause 6.1.4 of Non-Patent Literature 5 describes examples of signals that a gNB stops transmitting or receiving during cell DTX/DRX operation in a non-active period. In the first example, during the cell DTX/DRX off duration, the cell or gNB is expected to turn off all transmission or reception of data traffic and reference signals. In the second example, during the cell DTX/DRX off duration, the cell or gNB is expected to turn off only the transmission or reception of data traffic. That is, the gNB continues to transmit or receive reference signals. In the third example, during the cell DTX/DRX off duration, the cell or gNB is expected to turn off dynamic data transmission or reception. That is, the gNB is expected to continue transmitting or receiving on periodic resources such as Semi-Persistent Scheduling (SPS), Configured Grant (CG) Physical Uplink Shared Channel (PUSCH), Scheduling Request (SR), Random Access Channel (RACH), and Sounding Reference Signal (SRS). In the fourth example, during the cell DTX off duration, the cell or gNB is expected to transmit only reference signals (e.g., Channel State Information Reference Signal (CSI-RS) for measurement). Cell DTX and cell DRX can be configured and operated separately (e.g., one RRC configuration set for downlink and another RRC configuration set for uplink). Cell DTX and cell DRX can also be configured and operated together. For each cell DTX/DRX configuration, parameters including at least periodicity, start slot/offset, and ON duration can be configured. Non-Patent Literature 5 states that it is advantageous to align UE CDRX with cell DTX and to align DRX between multiple UEs.

Non-Patent Literature 6 proposes defining that a cell DTX off duration (or inactive period) opportunity occurs only in cases where all connected UEs in the cell are in CDRX inactive time, i.e., not decoding a PDCCH. Non-Patent Literature 6 states that there is a certain interest in the gNB aligning the CDRX cycles of UEs in order to maximize cell DTX opportunities. This alignment does not imply that multiple UEs have drx-onDurationTimer, drx-InactivityTimer, or drx-RetransmissionTimerDL/UL configured to the same value, but rather that these parameters are adjusted in some way so that there is some possible overlap in the inactive time of the UEs.

Non-Patent Literature 7 states that there may be cases where the gNB wants to extend the cell DTX/DRX ON duration for some additional downlink or uplink traffic at the end of the cell DTX/DRX ON duration (or active period). Non-Patent Literature 7 states that, as one simple method for this, an extended active duration timer triggered by dedicated or common Layer 1 or Layer 2 (L1/L2) signaling may be introduced. For example, whenever the network (or cell) wants to extend the cell DTX/DRX ON duration or active period, it can send an indication in the common L1/L2 signaling to extend the active time for the duration of the inactive timer, thereby effectively shortening the inactive period of the cell DTX/DRX cycle. Furthermore, the network can include in the indication how many cell DTX/DRX cycles the inactive timer should be executed. This approach needs to add an additional indication in the L1 signaling, as well as in the RRC configuration, to include the timer values for the extension.

Non-Patent Literature 8 proposes that it is necessary to define policies and mechanisms for extending the cell DTX and cell DRX ON durations in order to accommodate additional transmissions that may occur in the downlink and uplink. Without such policies, simply following the default cell DTX/DRX ON duration and OFF duration may lead to an inability to maintain responsive traffic patterns or to meet Quality of Service (QoS) or Quality of Experience (QoE) requirements associated with individual UEs. Non-Patent Literature 8 proposes including a configuration related to inactivity timers for cell DTX and cell DRX, specifically timer values, in RRC parameters for configuring cell DTX and cell DRX.

As described in Non-Patent Literature 5, the 3GPP Technical Specification Group (TSG) Radio Access Network (RAN) Working Group #2 (WG2) (RAN2) agreed that cell DTX mode and cell DRX mode can be configured per serving cell and operated separately or simultaneously. Based on this agreement, Non-Patent Literature 9 states that it is natural to reuse the existing System Information (SI) mechanism to provide cell DTX/DRX configuration in a grouping-like way. Non-Patent Literature 9 proposes to agree to add a System Information Block (SIB) and system information procedures for Release-18 NES used for broadcasting and updating cell DTX/DRX configurations. Furthermore, Non-Patent Literature 9 states that, with regard to cell DTX and CDRX adaptation, in cell DTX with legacy UEs, the active time of cell DTX needs to be extended in the same way as the operation of CDRX. Specifically, Non-Patent Literature 9 proposes that whenever a PDCCH indicates a new transmission in either the downlink or uplink, the cell DTX ON duration or active time is extended by the "drx-InactivityTimer". Non-Patent Literature 9 proposes that in cell DTX without legacy UEs, only retransmission is possible during the off duration or inactive time of cell DTX, and new data transmission such as SR is barred or delayed to the next opportunity.

Non-Patent Literature 10 states that one of the agreements reached at the RAN2 #121 meeting is that the cell DRX/DTX pattern configuration is common to Release 18 UEs within the cell. Additionally, Non-Patent Literature 10 states that the necessity of a DTX UE specific inactivity timer will be further studied. In other words, a DTX UE specific inactivity timer may be UE-specific rather than cell-common.

### Citation List

### Non Patent Literature

[Non-Patent Literature 1] 3GPP TS 38.300 V17.4.0 (2023-03) "3rd Generation Partnership Project; Technical Specification Group Radio Access Network; NR; NR and NG-RAN Overall Description; Stage 2 (Release 17)", March 2023
[Non-Patent Literature 2] 3GPP TS 38.321 V17.4.0 (2023-03) "3rd Generation Partnership Project; Technical Specification Group Radio Access Network; NR; Medium Access Control (MAC) protocol specification (Release 17)", March 2023
[Non-Patent Literature 3] 3GPP TS 38.331 V17.4.0 (2023-03) "3rd Generation Partnership Project; Technical Specification Group Radio Access Network; NR; Radio Resource Control (RRC) protocol specification (Release 17)", March 2023
[Non-Patent Literature 4] Huawei, "New WID: Network energy savings for NR", RP-223540, 3GPP TSG RAN Meeting #98-e, December 12-16, 2022
[Non-Patent Literature 5] 3GPP TR 38.864 V18.0.0 (2022-12) "3rd Generation Partnership Project; Technical Specification Group Radio Access Network; Study on network energy savings for NR (Release 18)", January 2023
[Non-Patent Literature 6] Qualcomm Incorporated, "Cell DTX/DRX NES Techniques", R2-2300539, 3GPP TSG-RAN WG2 Meeting #121, Athens, Greece, February 27 - March 3, 2023
[Non-Patent Literature 7] Intel Corporation, "Considerations of Cell DTX and DRX", R2-2300611, 3GPP TSG-RAN WG2 Meeting #121, Athens, Greece, February 27 - March 3, 2023
[Non-Patent Literature 8] Ericsson, "Further aspects on cell DTX/DRX", R2-2301399, 3GPP TSG-RAN WG2 Meeting #121, Athens, Greece, February 27 - March 3, 2023
[Non-Patent Literature 9] MediaTek Inc., "Further discussion on Cell DTX/DRX", R2-2301854, 3GPP TSG-RAN WG2 Meeting #121, Athens, Greece, February 27 - March 3, 2023
[Non-Patent Literature 10] Session Chair (InterDigital), "Report from Session on NES, UAV, Small Data, Rel-15-17 UP, Rel-17 Small Data, IIoT/URLLC, and RACH partitioning", R2-2301903, 3GPP TSG-RAN WG2 Meeting #121, Athens, Greece, February 27 - March 3, 2023

### Summary of Invention

### Technical Problem

The inventors have studied cell DTX/DRX and identified a number of problems. Some of the problems identified by the inventors relate to the extension of the cell DTX/DRX ON duration (or active time). First, it is currently unclear how to design L1/L2 signaling that indicates the extension of the ON duration for cell DTX/DRX. Second, it is unclear how a UE operates its CDRX-related timers (e.g., CDRX ON duration timer, CDRX inactivity timer, CDRX downlink retransmission timer, and CDRX uplink retransmission timer) during the extended cell DTX ON duration. Third, in a case where downlink data for a UE arrives at the gNB near the end of the cell DTX ON duration, and neither of the timers that determine the CDRX active time according to the CDRX configuration is scheduled to execute at the UE after the cell DTX ON duration, it is unclear how to deliver the downlink data to the UE in a timely manner. Fourth, it is unclear how a UE should operate when the cell DRX ON duration is extended on a UE-specific (or per-UE) basis. Fifth, in a case where the cell DRX ON duration is extended, it is unclear whether the types of uplink transmissions allowed for UEs during the extended ON duration are restricted, and if so, how they are restricted.

Some other problems identified by the inventors relate to the cell DRX pattern design. There is a time difference (delay, gap, or difference) between the time slot in which a dynamic uplink grant is transmitted in the downlink for PUSCH transmission and the time slot in which PUSCH transmission is performed in the uplink based on the grant. Accordingly, it may be beneficial to configure the cell DRX pattern based on or dependent on the cell DTX configuration.

One of the objects to be achieved by the example embodiments disclosed herein is to provide apparatuses, methods, and programs that contribute to solving at least one of a plurality of problems, including the problems described above. It should be noted that this object is only one of the objects to be achieved by the example embodiments disclosed herein. Other objects or problems and novel features will become apparent from the following description and the accompanying drawings.

### Solution to Problem

In a first aspect, a radio terminal is configured to receive, from a network, first Layer 1 or Layer 2 signaling that triggers an extension of an ON duration of a current DTX or DRX cycle of cell DTX or cell DRX. The first Layer 1 or Layer 2 signaling indicates one or both of a length of an extended ON duration and an offset that defines a start point of the extended ON duration. The radio terminal is configured to extend the ON duration of the current DTX or DRX cycle based on the first Layer 1 or Layer 2 signaling,

In a second aspect, a method performed by a radio terminal includes receiving, from a network, first Layer 1 or Layer 2 signaling that triggers an extension of an ON duration of a current DTX or DRX cycle of cell DTX or cell DRX, and extending the ON duration of the current DTX or DRX cycle based on the first Layer 1 or Layer 2 signaling. The first Layer 1 or Layer 2 signaling indicates one or both of a length of an extended ON duration and an offset that defines a start point of the extended ON duration.

In a third aspect, a radio access network node is configured to transmit to one or more radio terminals in a cell, first Layer 1 or Layer 2 signaling that triggers an extension of an ON duration of a current DTX or DRX cycle of cell DTX or cell DRX. The first Layer 1 or Layer 2 signaling indicates one or both of a length of an extended ON duration and an offset that defines a start point of the extended ON duration.

In a fourth aspect, a method performed by a radio access network node includes transmitting to one or more radio terminals in a cell, first Layer 1 or Layer 2 signaling that triggers an extension of an ON duration of a current DTX or DRX cycle of cell DTX or cell DRX. The first Layer 1 or Layer 2 signaling indicates one or both of a length of an extended ON duration and an offset that defines a start point of the extended ON duration.

In a fifth aspect, a radio terminal is configured to, during an ON duration in a current cell DTX cycle of cell DTX in a first serving cell, determine an active time for a CDRX group to which one or more serving cells including the first serving cell belong, based on whether any one of a plurality of CDRX-related timers is running. The radio terminal is also configured to, during an extended ON duration in the current cell DTX cycle, determine the active time for the CDRX group based on whether any one of one or more timers included in a subset of the plurality of CDRX-related timers is running.

In a sixth aspect, a method performed by a radio terminal includes the steps of:
(a) during an ON duration in a current cell DTX cycle of cell DTX in a first serving cell, determining an active time for a CDRX group to which one or more serving cells including the first serving cell belong, based on whether any one of a plurality of CDRX-related timers is running; and
(b) during an extended ON duration in the current cell DTX cycle, determining the active time for the CDRX group based on whether any one of one or more timers included in a subset of the plurality of CDRX-related timers is running.

In a seventh aspect, a radio terminal is configured to, during an ON duration in a current cell DTX cycle of cell DTX in a first serving cell, determine an active time for a CDRX group to which one or more serving cells including the first serving cell belong, based on whether any one of a plurality of CDRX-related timers is running. The radio terminal is also configured to receive, in the first serving cell from a network, Layer 1 or Layer 2 signaling that triggers an extension of the ON duration of the current cell DTX cycle and specifies a part of the plurality of CDRX-related timers. The radio terminal is further configured to, during an extended ON duration in the current cell DTX cycle, determine the active time for the CDRX group based on whether any one of one or more timers specified by the Layer 1 or Layer 2 signaling is running.

In an eighth aspect, a method performed by a radio terminal includes the steps of:
(a) during an ON duration in a current cell DTX cycle of cell DTX in a first serving cell, determining an active time for a CDRX group to which one or more serving cells including the first serving cell belong, based on whether any one of a plurality of CDRX-related timers is running;
(b) receiving, in the first serving cell from a network, Layer 1 or Layer 2 signaling that triggers an extension of the ON duration of the current cell DTX cycle and specifies a part of the plurality of CDRX-related timers; and
(c) during an extended ON duration in the current cell DTX cycle, determining the active time for the CDRX group based on whether any one of one or more timers specified by the Layer 1 or Layer 2 signaling is running.

In a ninth aspect, a radio access network node is configured to transmit, in a first serving cell, Layer 1 or Layer 2 signaling that triggers an extension of an ON duration of a current cell DTX cycle of cell DTX in the first serving cell. The Layer 1 or Layer 2 signaling specifies a part of a plurality of CDRX-related timers. The plurality of CDRX-related timers are used by a radio terminal to determine, during the ON duration in the current cell DTX cycle in the first serving cell, an active time for a CDRX group to which one or more serving cells including the first serving cell belong, based on whether any one of the plurality of CDRX-related timers is running. The Layer 1 or Layer 2 signaling causes the radio terminal to determine, during an extended ON duration in the current cell DTX cycle, the active time for the CDRX group based on whether any one of one or more timers specified by the Layer 1 or Layer 2 signaling is running.

In a tenth aspect, a method performed by a radio access network node includes transmitting, in a first serving cell, Layer 1 or Layer 2 signaling that triggers an extension of an ON duration of a current cell DTX cycle of cell DTX in the first serving cell. The Layer 1 or Layer 2 signaling specifies a part of a plurality of CDRX-related timers. The plurality of CDRX-related timers are used by a radio terminal to determine, during the ON duration in the current cell DTX cycle in the first serving cell, an active time for a CDRX group to which one or more serving cells including the first serving cell belong, based on whether any one of the plurality of CDRX-related timers is running. The Layer 1 or Layer 2 signaling causes the radio terminal to determine, during an extended ON duration in the current cell DTX cycle, the active time for the CDRX group based on whether any one of one or more timers specified by the Layer 1 or Layer 2 signaling is running.

In an eleventh aspect, a radio terminal is configured to receive, from a network, Layer 1 or Layer 2 signaling that triggers an extension of an ON duration of a current cell DTX cycle of cell DTX in a first serving cell. The radio terminal is also configured to, if a CDRX inactive timer for a CDRX group to which one or more serving cells including the first serving cell belong is not running, start the CDRX inactive timer in response to receiving the Layer 1 or Layer 2 signaling.

In a twelfth aspect, a method performed by a radio terminal includes receiving, from a network, Layer 1 or Layer 2 signaling that triggers an extension of an ON duration of a current cell DTX cycle of cell DTX in a first serving cell. The method also includes, if a CDRX inactive timer for a CDRX group to which one or more serving cells including the first serving cell belong is not running, starting the CDRX inactive timer in response to receiving the Layer 1 or Layer 2 signaling.

In a thirteenth aspect, a radio access network node is configured to transmit, to a radio terminal in a first serving cell, Layer 1 or Layer 2 signaling that triggers an extension of an ON duration of a current cell DTX cycle of cell DTX in the first serving cell. The Layer 1 or Layer 2 signaling causes the radio terminal to, if a CDRX inactive timer for a CDRX group to which one or more serving cells including the first serving cell belong is not running, start the CDRX inactive timer in response to receiving the Layer 1 or Layer 2 signaling.

In a fourteenth aspect, a method performed by a radio access network node includes transmitting, to a radio terminal in a first serving cell, Layer 1 or Layer 2 signaling that triggers an extension of an ON duration of a current cell DTX cycle of cell DTX in the first serving cell. The Layer 1 or Layer 2 signaling causes the radio terminal to, if a CDRX inactive timer for a CDRX group to which one or more serving cells including the first serving cell belong is not running, start the CDRX inactive timer in response to receiving the Layer 1 or Layer 2 signaling.

In a fifteenth aspect, a radio terminal is configured to, if an uplink transmission on a radio resource permitted by a dynamic uplink grant received by the radio terminal in RRC_CONNECTED mode during an ON duration of an activated cell DRX occurs during an off duration of the cell DRX following the ON duration, perform the uplink transmission in the off duration. The radio terminal is also configured to stop other uplink transmissions during the off duration, except for the uplink transmission based on the dynamic uplink grant, in a case where the radio terminal is in the RRC_CONNECTED mode.

In a sixteenth aspect, a method performed by a radio terminal includes, if an uplink transmission on a radio resource permitted by a dynamic uplink grant received by the radio terminal in RRC_CONNECTED mode during an ON duration of an activated cell DRX occurs during an off duration of the cell DRX following the ON duration, performing the uplink transmission in the off duration. The method also includes stopping other uplink transmissions during the off duration, except for the uplink transmission based on the dynamic uplink grant, in a case where the radio terminal is in the RRC_CONNECTED mode.

In a seventeenth aspect, a radio terminal is configured to perform a plurality of types of uplink transmission in an ON duration within a current cell DRX cycle of cell DRX in a serving cell. The radio terminal is also configured to receive, from a network, Layer 1 and Layer 2 signaling that triggers an extension of the ON duration of the current cell DRX cycle. The radio terminal is further configured to, during an extended ON duration in the current cell DRX cycle, perform only a part of the plurality of types of uplink transmission and stop a remainder of the plurality of types of uplink transmission.

In an eighteenth aspect, a method performed by a radio terminal includes the steps of:
(a) performing a plurality of types of uplink transmission in an ON duration within a current cell DRX cycle of cell DRX in a serving cell;
(b) receiving, from a network, Layer 1 and Layer 2 signaling that triggers an extension of the ON duration of the current cell DRX cycle; and
(c) during an extended ON duration in the current cell DRX cycle, performing only a part of the plurality of types of uplink transmission and stopping a remainder of the plurality of types of uplink transmission.

In a nineteenth aspect, a radio terminal is configured to perform a plurality of types of uplink transmission in an ON duration within a current cell DRX cycle of cell DRX in a serving cell. The radio terminal is also configured to receive, from a network, Layer 1 and Layer 2 signaling that triggers an extension of the ON duration of the current cell DRX cycle and indicates one or more allowed types among the plurality of types of uplink transmission. The radio terminal is further configured to, during an extended ON duration in the current cell DRX cycle, perform only the one or more types of uplink transmission indicated by the Layer 1 and Layer 2 signaling and stop a remainder of the plurality of types of uplink transmission.

In a twentieth aspect, a method performed by a radio terminal includes the steps of:
(a) performing a plurality of types of uplink transmission in an ON duration within a current cell DRX cycle of cell DRX in a serving cell;
(b) receiving, from a network, Layer 1 and Layer 2 signaling that triggers an extension of the ON duration of the current cell DRX cycle and indicates one or more allowed types among the plurality of types of uplink transmission; and
(c) during an extended ON duration in the current cell DRX cycle, performing only the one or more types of uplink transmission indicated by the Layer 1 and Layer 2 signaling and stopping a remainder of the plurality of types of uplink transmission.

In a twenty-first aspect, a radio access network node is configured to transmit Layer 1 or Layer 2 signaling within a serving cell to trigger an extension of an ON duration of a current cell DRX cycle of cell DRX in the serving cell. The Layer 1 or Layer 2 signaling indicates one or more allowed types among a plurality of types of uplink transmission that can be performed by a radio terminal within the ON duration. The Layer 1 or Layer 2 signaling causes the radio terminal to, during an extended ON duration in the current cell DRX cycle, perform only the one or more types of uplink transmission indicated by the Layer 1 and Layer 2 signaling and stop a remainder of the plurality of types of uplink transmission.

In a twenty-second aspect, a method performed by a radio access network node includes transmitting Layer 1 or Layer 2 signaling within a serving cell to trigger an extension of an ON duration of a current cell DRX cycle of cell DRX in the serving cell. The Layer 1 or Layer 2 signaling indicates one or more allowed types among a plurality of types of uplink transmission that can be performed by a radio terminal within the ON duration. The Layer 1 or Layer 2 signaling causes the radio terminal to, during an extended ON duration in the current cell DRX cycle, perform only the one or more types of uplink transmission indicated by the Layer 1 and Layer 2 signaling and stop a remainder of the plurality of types of uplink transmission.

In a twenty-third aspect, a radio terminal is configured to receive from a network, via radio terminal-specific or cell-specific RRC signaling, a first configuration related to cell DTX and a second configuration related to cell DRX. The first configuration indicates a length of a cycle of the cell DTX and a length of an ON duration of the cell DTX. The radio terminal is configured to determine a pattern of the cell DRX using the first configuration and the second configuration. Specifically, the radio terminal is configured to recognize that a length of a cycle of the cell DRX and a length of an ON duration of the cell DRX are the same as the length of the cycle of the cell DTX and the length of the ON duration of the cell DTX, respectively, as indicated by the first configuration. The second configuration indicates an offset for a start slot of the ON duration of the cell DRX from a start slot of the ON duration of the cell DTX.

In a twenty-fourth aspect, a method performed by a radio terminal includes receiving from a network, via radio terminal-specific or cell-specific RRC signaling, a first configuration related to cell DTX and a second configuration related to cell DRX; and determining a pattern of the cell DRX using the first configuration and the second configuration. The first configuration indicates a length of a cycle of the cell DTX and a length of an ON duration of the cell DTX. The determining includes recognizing that a length of a cycle of the cell DRX and a length of an ON duration of the cell DRX are the same as the length of the cycle of the cell DTX and the length of the ON duration of the cell DTX, respectively, as indicated by the first configuration. The second configuration indicates an offset for a start slot of the ON duration of the cell DRX from a start slot of the ON duration of the cell DTX.

In a twenty-fifth aspect, a radio terminal is configured to receive from a network, via radio terminal-specific or cell-specific RRC signaling, a first configuration related to cell DTX and a second configuration related to cell DRX. The first configuration indicates a length of a cycle of the cell DTX and a start slot of an ON duration of the cell DTX. The radio terminal is configured to determine a pattern of the cell DRX using the first configuration and the second configuration. Specifically, the radio terminal is configured to recognize that a length of a cycle of the cell DRX and a start slot of an ON duration of the cell DRX are the same as the length of the cycle of the cell DTX and the start slot of the ON duration of the cell DTX, respectively, as indicated by the first configuration. The second configuration indicates how much longer the ON duration of the cell DRX is than the ON duration of the cell DTX.

In a twenty-sixth aspect, a method performed by a radio terminal includes receiving from a network, via radio terminal-specific or cell-specific RRC signaling, a first configuration related to cell DTX and a second configuration related to cell DRX; and determining a pattern of the cell DRX using the first configuration and the second configuration. The first configuration indicates a length of a cycle of the cell DTX and a start slot of an ON duration of the cell DTX. The determining includes recognizing that a length of a cycle of the cell DRX and a start slot of an ON duration of the cell DRX are the same as the length of the cycle of the cell DTX and the start slot of the ON duration of the cell DTX, respectively, as indicated by the first configuration. The second configuration indicates how much longer the ON duration of the cell DRX is than the ON duration of the cell DTX.

In a twenty-seventh aspect, a program includes a set of instructions (software code) that, when loaded into a computer, causes the computer to perform the operations or methods of the radio terminal or radio access network node described in the above aspects.

### Advantageous Effects of Invention

According to the aspects described above, it is possible to provide apparatuses, methods, and programs that contribute to solving at least one of a plurality of problems, including the problems described above.

### Brief Description of Drawings

Fig. 1 is a diagram showing an example configuration of a radio communication system related to one or more example embodiments.
Fig. 2 is a diagram showing a CDRX cycle.
Fig. 3 is a diagram showing examples of a plurality of CDRX-related timers.
Fig. 4 is a diagram showing examples of a plurality of CDRX-related timers.
Fig. 5 is a diagram showing a cell DTX cycle.
Fig. 6 is a diagram showing an example of extension of a cell DTX ON duration.
Fig. 7 is a diagram showing a cell DRX cycle.
Fig. 8 is a diagram showing an example of extension of a cell DRX ON duration.
Fig. 9 is a diagram showing an example of a relationship between an extended cell DTX ON duration and operation times of a plurality of CDRX-related timers.
Fig. 10 is a flowchart showing an example of operation of a UE related to one or more example embodiments.
Fig. 11 is a flowchart showing an example of operation of a UE related to one or more example embodiments.
Fig. 12 is a flowchart showing an example of operation of a UE related to one or more example embodiments.
Fig. 13 is a flowchart showing an example of operation of a UE related to one or more example embodiments.
Fig. 14 is a flowchart showing an example of operation of a UE related to one or more example embodiments.
Fig. 15 is a flowchart showing an example of operation of a UE related to one or more example embodiments.
Fig. 16 is a flowchart showing an example of operation of a UE related to one or more example embodiments.
Fig. 17 is a diagram showing an example of a cell DTX pattern and a cell DRX pattern related to one or more example embodiments.
Fig. 18 is a flowchart showing an example of operation of a UE related to one or more example embodiments.
Fig. 19 is a diagram showing an example of a cell DTX pattern and a cell DRX pattern related to one or more example embodiments.
Fig. 20 is a block diagram showing an example configuration of a UE related to one or more example embodiments.
Fig. 21 is a block diagram showing an example configuration of a radio access network node related to one or more example embodiments.

### Example Embodiment

Specific example embodiments will be described hereinafter in detail with reference to the drawings. Identical or corresponding elements are designated by the same symbols throughout the drawings, and duplicate explanations are omitted where necessary for the sake of clarity.

The multiple example embodiments described below may be implemented independently or in any suitable combination. These multiple example embodiments have novel features that differ from one another. Accordingly, these multiple example embodiments contribute to achieving different objectives or solving different problems and contribute to achieving different advantages.

Each of the drawings or figures is merely an example to illustrate one or more example embodiments. Each figure may not be associated with only one particular example embodiment but may be associated with one or more other example embodiments. As will be appreciated by those of ordinary skill in the art, various features or steps described with respect to any one of the figures may be combined with features or steps illustrated in one or more other figures to produce, for example, example embodiments that are not explicitly illustrated or described. Not all of the features or steps illustrated in any one of the figures to describe an example embodiment are necessarily essential, and some features or steps may be omitted. The order of the steps described in any of the figures may be changed as appropriate.

The following example embodiments are primarily described in the context of the 3GPP fifth generation mobile communication system (5G system). However, these example embodiments may also be applied to other radio communication systems that support technologies similar to 3GPP cell DTX and cell DRX.

As used in this specification, "if" can be interpreted to mean "when", "at or around the time", "after", "upon", "in response to determining", "in accordance with a determination", or "in response to detecting", depending on the context. These expressions can be interpreted to mean the same thing, depending on the context.

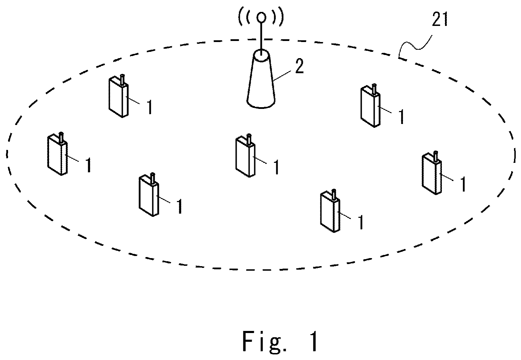

First, the configuration and operation of a plurality of network elements common to a plurality of example embodiments are described. Fig. 1 shows an example configuration of a radio communication system related to a plurality of example embodiments. Each element (or network function) shown in Fig. 1 can be implemented, for example, as a network element on dedicated hardware, as a software instance running on dedicated hardware, or as a virtualized function instantiated on an application platform.

In the example shown in Fig. 1, the radio communication system includes a plurality of UEs 1 and a radio access network (RAN) node 2. In the following, unless otherwise specified, the term "UE 1" refers to matters common to the plurality of UEs 1. The UE 1 may be referred to by other terms, such as a radio terminal, a mobile terminal, a mobile station, or a wireless transmit receive unit (WTRU). The RAN node 2 may be referred to by other terms, such as a network, a base station, or a radio station. The UE 1 has at least one radio transceiver and communicates with the RAN node 2. The RAN node 2 manages, operates, or provides a cell 21 and communicates with a plurality of UEs 1 within the cell 21 using cellular communication technology (i.e., NR Radio Access Technology). These communications include downlink and uplink transmissions. Downlink transmissions include the transmission of cell-specific synchronization signals, the transmission of cell-specific and UE-specific reference signals, the transmission of broadcast channels (e.g., Physical Broadcast Channel (PBCH)), the transmission of control channels (e.g., PDCCH), and the transmission of data transmission channels (e.g., Physical Downlink Shared Channel (PDSCH)). Uplink transmissions include the transmission of reference signals, the transmission of random access channels (i.e., Physical RACH (PRACH)), the transmission of control channels (e.g., PUCCH), and the transmission of data transmission channels (e.g., PUSCH).

The RAN node 2 may provide multiple cells including the cell 21, and the UE 1 may be connected to multiple cells provided by the RAN node 2 simultaneously. In other words, the UE 1 may perform carrier aggregation (CA) between multiple cells provided by the RAN node 2. Additionally, the UE 1 may be connected to the RAN node 2 and another RAN node simultaneously for dual connectivity (DC).

The RAN node 2 may be a Next Generation Radio Access Network (NG-RAN) node. An NG-RAN node may be a gNB or an ng-eNB. An ng-eNB is a node that provides Evolved Universal Mobile Telecommunications System (UMTS) Terrestrial Radio Access (E-UTRA) user plane and control plane protocol termination to UEs and is connected to a 5G Core Network (5GC) via an NG interface. The RAN node 2 may be a Central Unit (e.g., gNB-CU) in a cloud RAN (C-RAN) deployment, or a combination of a CU and one or more Distributed Units (e.g., gNB-DUs). C-RAN is also referred to as CU/DU split. Furthermore, the CU may include a Control Plane (CP) Unit (e.g., gNB-CU-CP) and one or more User Plane (UP) Units (e.g., gNB-CU-UP). Accordingly, the RAN node 2 may be a CU-CP or a combination of a CU-CP and a CU-UP. A CU may be a logical node that hosts the Radio Resource Control (RRC), Service Data Adaptation Protocol (SDAP), and Packet Data Convergence Protocol (PDCP) protocols of a gNB (or the RRC and PDCP protocols of a gNB). A DU may be a logical node that hosts the Radio Link Control (RLC), Medium Access Control (MAC), and Physical (PHY) layers of a gNB.

The UE 1 and the RAN node 2 support connected mode DRX (CDRX). If CDRX is configured, the UE 1 does not need to continuously monitor a PDCCH. CDRX is characterized by its on-duration, inactivity timer, retransmission timer, cycle, and active time. The on-duration is the duration that the UE 1 waits for, after waking up, to receive PDCCHs. If the UE 1 successfully decodes a PDCCH, it stays awake and starts the inactivity timer. The inactivity timer is the duration that the UE 1 waits to successfully decode a next PDCCH from the last successful decoding of a PDCCH. If PDCCH decoding fails until the inactive timer expires, the UE 1 can return to sleep. The retransmission timer is the duration during which the UE 1 must be awake to receive retransmissions. The DRX cycle specifies a periodic repetition of the on-duration, followed by a period of possible inactivity. The active time is the total duration during which the UE 1 monitors a PDCCH. The active time includes the on-duration within a DRX cycle, the time during which the UE 1 performs continuous reception while the inactivity timer has not expired, and the time during which the UE 1 performs continuous reception while waiting for a retransmission opportunity.

CDRX is controlled by RRC. The CDRX-related parameters provided to the UE from the network by the RRC configuration (DRX-Config) include the following: drx-onDurationTimer, drx-SlotOffset, drx-InactivityTimer, drx-RetransmissionTimerDL (per Downlink (DL) HARQ process except for the broadcast process), drx-RetransmissionTimerUL (per Uplink (UL) HARQ process),drx-LongCycleStartOffset, drx-ShortCycle (optional), drx-ShortCycleTimer (optional), drx-HARQ-RTT-TimerDL (per DL HARQ process except for the broadcast process), and drx-HARQ-RTT-TimerUL (per UL HARQ process). Multiple serving cells of a MAC entity of the UE 1 may be configured by the RRC with two CDRX groups having different CDRX parameters. As described above, the term "CDRX group" is used in this description instead of the term "DRX group" used in the 3GPP specification. If two CDRX groups are configured, each serving cell is uniquely assigned to one of the two groups. The CDRX parameters that are configured individually for each CDRX group are drx-onDurationTimer and drx-InactivityTimer. On the other hand, the CDRX parameters common to the multiple CDRX groups are drx-SlotOffset, drx-RetransmissionTimerDL, drx-RetransmissionTimerUL, drx-LongCycleStartOffset, drx-ShortCycle (optional), drx-ShortCycleTimer (optional), drx-HARQ-RTT-TimerDL, and drx-HARQ-RTT-TimerUL.

The drx-onDurationTimer is a timer that measures the CDRX on-duration. The drx-onDurationTimer specifies the duration for decoding PDCCH at the beginning of each DRX cycle (DRX ON) before entering power saving mode (CDRX OFF).

The drx-SlotOffset specifies the delay time before starting the drx-onDurationTimer. In other words, the drx-SlotOffset defines the start of the CDRX on-duration (or drx-onDurationTimer) based on the start of a subframe.

The drx-InactivityTimer defines the duration after a PDCCH occasion that indicates a new uplink UL, downlink, or sidelink transmission for the MAC entity. In other words, the drx-InactivityTimer indicates the duration that the UE 1 waits to successfully decode a (next) PDCCH from the last successful decoding of a PDCCH.

The drx-RetransmissionTimerDL indicates the maximum duration until a downlink retransmission is received. In other words, the drx-RetransmissionTimerDL indicates the duration during which the UE 1 shall be awake to receive a downlink retransmission.

The drx-RetransmissionTimerUL indicates the maximum duration until a grant (uplink grant) for uplink retransmission is received. In other words, the drx-RetransmissionTimerUL indicates the duration during which the UE 1 shall be awake to receive a grant for uplink retransmission.

The drx-LongCycleStartOffset indicates the long DRX cycle (drx-LongCycle) and the start offset (drx-StartOffset). The drx-StartOffset defines the subframe where the long DRX cycle and short DRX cycle start.

The drx-ShortCycle (optional) indicates the short DRX cycle.

The drx-ShortCycleTimer (optional) indicates the duration for which the UE 1 follows the short DRX cycle. The drx-ShortCycleTimer indicates the timer value as a multiple of the short DRX cycle (drx-ShortCycle), and the timer value can be 1 to 16, i.e., 1 to 16 short DRX cycles.

The drx-HARQ-RTT-TimerDL indicates the minimum duration or interval before a DL assignment for HARQ retransmission is expected by the MAC entity. In other words, the drx-HARQ-RTT-TimerDL defines the minimum amount of time before the UE 1 can expect a downlink retransmission after sending a hybrid automatic repeat request (HARQ) negative acknowledge (NACK) in the uplink.

The drx-HARQ-RTT-TimerUL indicates the minimum duration or interval before a grant for uplink retransmission is expected by the MAC entity. In other words, the drx-HARQ-RTT-TimerUL defines the minimum amount of time before the UE 1 can expect to receive a downlink grant for retransmission after performing a PUSCH transmission.

If CDRX is configured, the active time for multiple serving cells in a CDRX group includes, among other time periods, the time while:
- the drx-onDurationTimer or drx-InactivityTimer configured for the CDRX group is running; or
- the drx-RetransmissionTimerDL or drx-RetransmissionTimerUL is running on any of the serving cells in the CDRX group; or
- a scheduling request is sent on a PUCCH and is pending; or
- a PDCCH indicating a new transmission to the C-RNTI of the MAC entity has not been received after successful reception of a random access response to a random access preamble not selected by the MAC entity.

The network, specifically the RAN node 2, provides the UE 1 with an RRC configuration (i.e., DRX-Config) related to CDRX by using a UE-specific (or dedicated) RRC message, specifically an RRCReconfiguration message. The DRX-Config is contained in a MAC-CellGroupConfig within a CellGroupConfig carried by an RRCReconfiguration message.

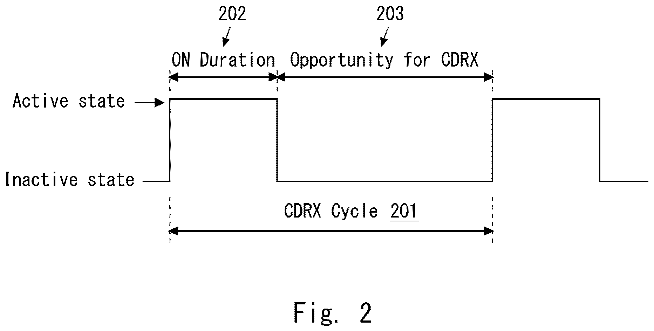

Fig. 2 shows an example of a CDRX cycle. As shown in Fig. 2, one CDRX cycle 201 includes an ON duration 202 at the beginning of the cycle. The ON duration 202 is one of the CDRX active times of the UE 1. After the ON duration 202, there is a CDRX opportunity 203. During the CDRX opportunity 203, the UE 1 can enter sleep mode if neither the inactivity timer (drx-InactivityTimer) nor the retransmission timers (drx-RetransmissionTimerDL, drx-RetransmissionTimerUL) are running.

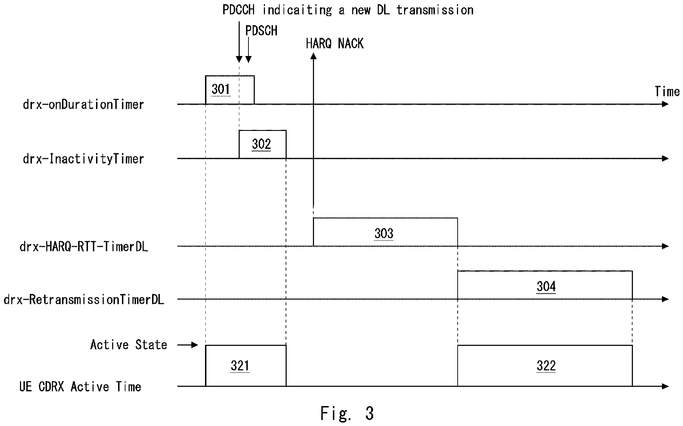

Fig. 3 is a diagram showing the relationship between multiple CDRX-related timers and the CDRX active time with respect to downlink reception by the UE 1. If the UE 1 receives a PDCCH indicating a new downlink (DL) transmission while the on-duration timer (drx-onDurationTimer) 301 is running, the UE 1 starts or restarts the inactivity timer (drx-InactivityTimer) 302. The MAC entity of the UE 1 starts or restarts the inactivity timer (drx-InactivityTimer) 302 at the first symbol after PDCCH reception ends. If the UE 1 fails in PDSCH reception, the UE 1 transmits a HARQ NACK and starts the HARQ round trip time (RTT) timer (drx-HARQ-RTT-TimerDL) 303 for the corresponding HARQ process. The MAC entity of the UE 1 starts the HARQ RTT timer (drx-HARQ-RTT-TimerDL) 303 for the corresponding HARQ process in the first symbol after the end of the transmission carrying the HARQ feedback (NACK). After the HARQ RTT timer (drx-HARQ-RTT-TimerDL) 303 expires, the UE 1 immediately starts the retransmission timer (drx-RetransmissionTimerDL) 304 for the corresponding HARQ process. The MAC entity of the UE 1 starts the retransmission timer (drx-RetransmissionTimerDL) 304 at the first symbol after the expiration of the HARQ RTT timer (drx-HARQ-RTT-TimerDL) 303. In the example shown in Fig. 3, the CDRX active time includes the time period 321 during which the on-duration timer (drx-onDurationTimer) 301 and the inactivity timer (drx-InactivityTimer) 302 are running, and the time period 322 during which the retransmission timer (drx-RetransmissionTimerDL) 304 is running. During the CDRX active time, the UE 1 is required to monitor a PDCCH.

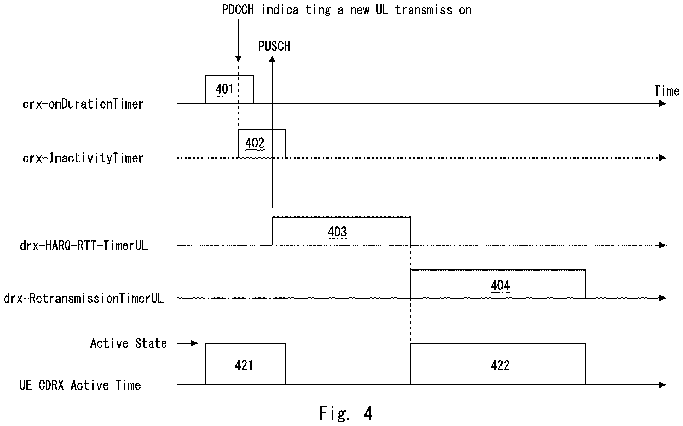

Fig. 4 is a diagram showing the relationship between multiple CDRX-related timers and the CDRX active time with respect to uplink transmission of the UE 1. If the UE 1 receives a PDCCH indicating a grant for a new uplink (UL) transmission while the on-duration timer (drx-onDurationTimer) 401 is running, the UE 1 starts or restarts the inactivity timer (drx-InactivityTimer) 402. The MAC entity of the UE 1 starts or restarts the inactivity timer (drx-InactivityTimer) 402 at the first symbol after PDCCH reception ends. After the PUSCH transmission, the UE 1 starts the HARQ RTT timer (drx-HARQ-RTT-TimerUL) 403 for the corresponding HARQ process. The MAC entity of the UE 1 starts the HARQ RTT timer (drx-HARQ-RTT-TimerUL) 403 at the first symbol after the end of the first transmission of the PUSCH transmission. After the HARQ RTT timer (drx-HARQ-RTT-TimerUL) 403 expires, the UE 1 immediately starts the retransmission timer (drx-RetransmissionTimerUL) 404 for the corresponding HARQ process. The MAC entity of the UE 1 starts the retransmission timer (drx-RetransmissionTimerUL) 404 at the first symbol after the expiration of the HARQ RTT timer (drx-HARQ-RTT-TimerUL) 403. In the example shown in Fig. 4, the CDRX active time includes the time period 421 during which the on-duration timer (drx-onDurationTimer) 401 and the inactivity timer (drx-InactivityTimer) 402 are running, and the time period 422 during which the retransmission timer (drx-RetransmissionTimerUL) 404 is running. During the CDRX active time, the UE 1 is required to monitor a PDCCH.

Furthermore, the UE 1 and the RAN node 2 support cell DTX and cell DRX. As described above, in the present description, the terms "cell DTX ON duration," "cell DTX off duration," "cell DRX ON duration," and "cell DRX off duration" are used with respect to cell DTX/DRX. The cell DTX/DRX ON duration refers to the duration, time, or period during which a cell is active and can transmit and receive all necessary cell common channels and signals, as well as UE-specific signals and channels. In contrast, the cell DTX/DRX off duration refers to the duration, time, or period during which the cell is in an inactive state for NES and does not transmit or receive, or is allowed to maintain only restricted transmission or reception. The cell DTX/DRX ON duration may also be referred to as the cell DTX/DRX ON time or period, or the cell DTX/DRX active time, period, or duration. The cell DTX/DRX off duration may also be referred to as the cell DTX/DRX off time or off period, or the cell DTX/DRX inactive (or non-active) time, period, or duration.

If the cell DTX of the cell 21 is activated, the RAN node 2 may not perform downlink transmission in the cell 21 during the off duration of the cell DTX, or may maintain only restricted downlink transmission. Similarly, if the cell DRX of the cell 21 is activated, the RAN node 2 may not perform uplink reception in the cell 21 during the off duration of the cell DRX, or may maintain only restricted uplink reception. In the first example, during the cell DTX/DRX off duration, the RAN node 2 is expected to turn off all transmission or reception of data traffic and reference signals in the cell 21. In the second example, during the cell DTX/DRX off duration, the RAN node 2 is expected to turn off only the transmission or reception of data traffic in the cell 21. That is, the RAN node 2 continues to transmit or receive reference signals. In the third example, during the cell DTX/DRX off duration, the RAN node 2 is expected to turn off dynamic data transmission or reception in the cell 21. That is, the RAN node 2 is expected to continue to transmit or receive on periodic resources such as SPS, CG PUSCH, SR, RACH, and SRS. In the fourth example, during the cell DTX off duration, the RAN node 2 is expected to transmit only reference signals (e.g., CSI-RS for measurement) in the cell 21.

Cell DTX mode and cell DRX mode can be configured and operated separately (e.g., one RRC configuration set for downlink and another RRC configuration set for uplink). Cell DTX and cell DRX can also be configured and operated together. For each cell DTX/DRX configuration, parameters including at least periodicity, start slot/offset, and ON duration can be configured. The RAN node 2 may provide the cell DTX/DRX configuration information to the UE 1 via cell-common or UE-specific RRC signaling. The cell-common RRC signaling may be system information (e.g., SIB). The UE-specific RRC signaling may be an RRC Reconfiguration message.

Cell DTX and cell DRX may be activated or deactivated separately or together. Cell DTX/DRX activation may be performed using Layer 1, Layer 2, or Layer 3 (L1/L2/L3) signaling. The RAN node 2 may transmit L1/L2/L3 signaling indicating cell DTX/DRX activation. This indication may be referred to as NES mode indication, NES activation indication, etc. The L1/L2/L3 signaling may be UE-specific or cell-specific (i.e., cell common). UE-specific L1 signaling may be a Downlink Control Information (DCI) format with Cyclic Redundancy Check (CRC) bits scrambled by a UE-specific RNTI. In other words, UE-specific L1 signaling may be a PDCCH that carries CRC bits scrambled by a UE-specific RNTI. Cell-specific L1 signaling may be a DCI format with CRC bits scrambled by a cell-specific or UE group-specific RNTI. In other words, cell-specific L1 signaling may be a PDCCH that carries CRC bits scrambled by a cell-specific RNTI. UE-specific L2 signaling may be a MAC CE transmitted in a PDSCH that is scheduled by a DCI format with CRC bits scrambled by a UE-specific RNTI. Cell-specific L2 signaling may be a MAC Control Element (CE) transmitted in a PDSCH scheduled by a DCI format with CRC bits scrambled by a cell-specific or UE group-specific RNTI. Cell-specific L3 signaling may be system information (e.g., SIB). UE-specific L3 signaling may be an RRC Reconfiguration message. Details of signaling for activating cell DTX/DRX are described in example embodiments below.

The cell DTX/DRX ON duration may be extended. The cell DTX ON duration and the cell DRX ON duration may be extended separately or together. If the RAN node 2 wants to extend the cell DTX ON duration or the cell DRX ON duration or both, it may send L1/L2 signaling to the UE 1 to trigger the extension of the ON duration. This L1/L2 signaling may be cell-specific (or cell-common) or UE-specific. Extension of the cell DTX/DRX ON duration within a cell DTX/DRX cycle is accompanied by a reduction of the cell DTX/DRX OFF duration within that cycle.

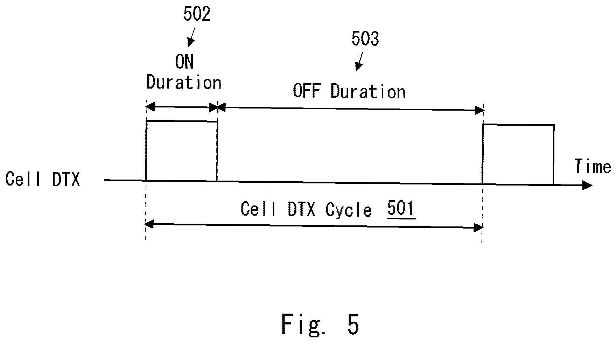

Fig. 5 shows an example of a cell DTX cycle. As shown in Fig. 5, a single cell DTX cycle 501 includes the ON duration 502 at the beginning of the cycle. The ON duration 502 is followed by the OFF duration 503.

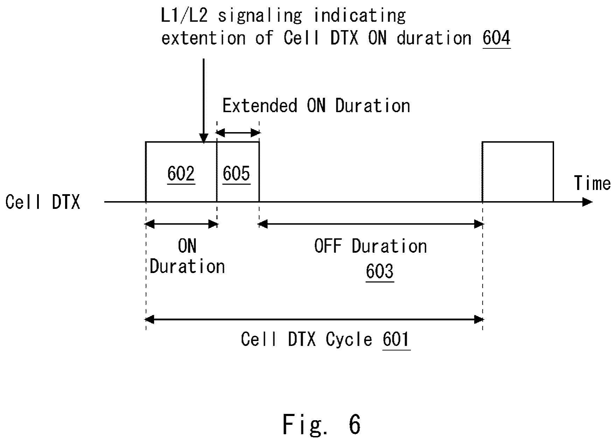

Fig. 6 shows an example of extending the ON duration of cell DTX. In the example of Fig. 6, during the ON duration 602 in the current cell DTX cycle 601, the RAN node 2 sends L1/L2 signaling 604 to UE 1 to trigger the extension of the ON duration 602. In response to receiving the L1/L2 signaling 604, the UE 1 recognizes that the ON duration 602 is extended. The OFF duration 603 within the current cell DTX cycle 601 is shortened by the length of the extended ON duration 605. The RAN node 2 may transmit the L1/L2 signaling 604 in a predetermined time slot within the on-duration 602. The predetermined time slot may be the last time slot of the ON duration 602. This contributes to reducing the complexity and power consumption of the UE 1 for receiving the L1/L2 signaling 604. Additionally, the time slot may be a slot defined in the 5G NR frame structure. A 5G NR slot is a unit of scheduling and consists of 14 Orthogonal Frequency Division Multiplexing (OFDM) symbols. The number of slots within one subframe (i.e., 1 ms) varies depending on the numerology (particularly the subcarrier spacing).

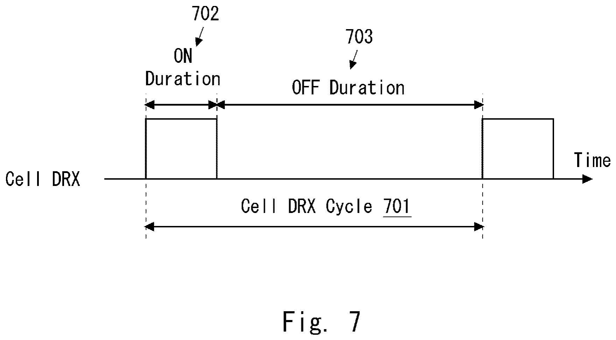

Fig. 7 shows an example of a cell DRX cycle. As shown in Fig. 7, a single cell DRX cycle 701 includes the ON duration 702 at the beginning of the cycle. The ON duration 702 is followed by the off duration 703.

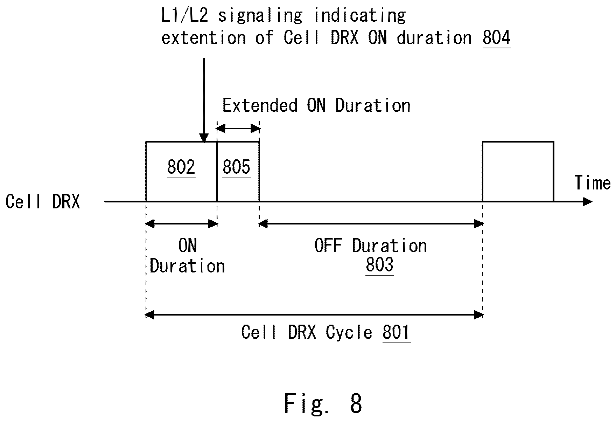

Fig. 8 shows an example of extending the ON duration of a cell DRX. In the example shown in Fig. 8, during the ON duration 802 in the current cell DRX cycle 801, the RAN node 2 sends L1/L2 signaling 804 to the UE 1 to trigger the extension of the ON duration 802. In response to receiving the L1/L2 signaling 804, the UE 1 recognizes that the ON duration 802 is extended. The off duration 803 within the current cell DRX cycle 801 is shortened by the length of the extended ON duration 805. As described with respect to cell DTX, the RAN node 2 may transmit the L1/L2 signaling 804 in a predetermined time slot within the ON duration 802. The predetermined time slot may be the last time slot of the ON duration 802. This contributes to reducing the complexity and power consumption of the UE 1 for receiving the L1/L2 signaling 804.

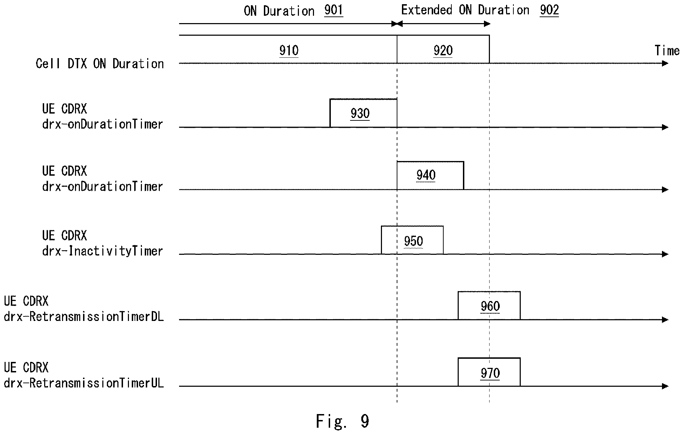

Fig. 9 shows an example of the relationship between the extended cell DTX ON duration and the operation times of multiple CDRX-related timers. In the example shown in Fig. 9, the extended cell DTX ON duration 920 is activated. The extended cell DTX ON duration 920 follows immediately after the cell DTX ON duration 910. Whether or not the operation times of various CDRX-related timers, which are considered the UE CDRX active time, overlap with the extended cell DTX ON duration 920 depends on either or both of the CDRX configuration and the cell DTX configuration. For example, the operation time 930 of the CDRX ON duration timer (i.e., drx-onDurationTimer) may expire before the start of the extended cell DTX ON duration 920. Alternatively, part or all of the operation time 940 of the CDRX ON duration timer (i.e., drx-onDurationTimer) may overlap with the extended cell DTX ON duration 920. Similarly, part or all of the operating time 950 of the CDRX inactivity timer (i.e., drx-InactivityTimer) may overlap with the extended cell DTX ON duration 920. Part or all of the operating time 960 of the CDRX downlink retransmission timer (i.e., drx-RetransmissionTimerDL) may also overlap with the extended cell DTX ON duration 920. Furthermore, part or all of the operation time 970 of the CDRX uplink retransmission timer (i.e., drx-RetransmissionTimerUL) may overlap with the extended cell DTX ON duration 920. How the UE operates CDRX-related timers (e.g., CDRX ON duration timer, CDRX inactivity timer, CDRX downlink retransmission timer, and CDRX uplink retransmission timer) during the extended cell DTX ON duration 920 is described in example embodiments below.

### First Example Embodiment

An example configuration of a radio communication system according to the present example embodiment is the same as the example configuration described with reference to Fig. 1. The present example embodiment provides details of L1/L2 signaling to instruct an extension of the ON duration for cell DTX/DRX.

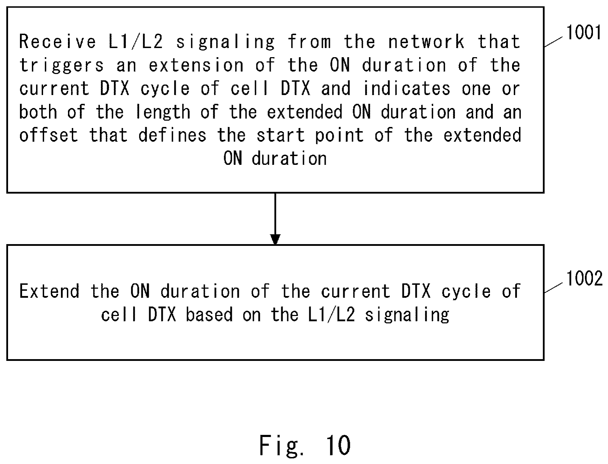

Fig. 10 shows an example of the operation of the UE 1. In step 1001, the UE 1 receives L1/L2 signaling from the network (e.g., RAN node 2). The L1/L2 signaling triggers an extension of the ON duration of the current DTX cycle of cell DTX. The L1/L2 signaling also indicates one or both of the length of the extended ON duration of cell DTX and an offset that defines the start point of the extended ON duration. In step 1002, the UE 1 extends the ON duration of the current cell DTX cycle based on the L1/L2 signaling.

The L1/L2 signaling in step 1001 may be UE-specific or cell-specific. UE-specific L1 signaling may be a DCI format with CRC bits scrambled by a UE-specific RNTI (e.g., C-RNTI), or a PDCCH carrying such a DCI format. In other words, UE-specific L1 signaling may be a PDCCH carrying CRC bits scrambled by a UE-specific RNTI. UE-specific L2 signaling may be a MAC CE transmitted on a PDSCH scheduled by a DCI format with CRC bits scrambled by a UE-specific RNTI (e.g., C-RNTI). On the other hand, cell-specific or cell-common L1 signaling may be a DCI format with CRC bits scrambled by a cell-specific RNTI, or a PDCCH carrying such a DCI format. In other words, cell-specific L1 signaling may be a PDCCH carrying CRC bits scrambled by a cell-specific RNTI. The cell-specific RNTI may be an RNTI newly defined for cell DTX/DRX. The name of the newly defined RNTI may be, for example, cellDTX-RNTI. Cell-specific or cell-common L2 signaling may be a MAC CE transmitted on a PDSCH scheduled by a DCI format with CRC bits scrambled by a cell-specific RNTI.

As described with reference to Fig. 6, the RAN node 2 may transmit the L1/L2 signaling of step 1001 at a predetermined time slot within the ON duration of the current cell DTX cycle. The predetermined time slot may be the last time slot of the ON duration. This contributes to reducing the complexity and power consumption of the UE 1 for receiving the L1/L2 signaling.

For example, the L1/L2 signaling in step 1001 indicates the length of the cell DTX extended ON duration. This allows the length of the extended ON duration to be specified dynamically per cell DTX cycle. To indicate the length of the cell DTX extended ON duration, the L1/L2 signaling may indicate the timer value or expiration period of an extended active duration timer or inactive timer. The L1/L2 signaling may contain or carry an integer value that directly indicates the length, timer value, or expiration period of the cell DTX extended ON duration. Alternatively, the L1/L2 signaling may contain or carry an integer value (e.g., an index) that specifies one of a plurality of predetermined candidate values. The plurality of candidate values for the length of the cell DTX extended ON duration may be included in the cell DTX configuration information. The network (e.g., RAN node 2) may provide the cell DTX configuration information containing the plurality of candidate values to the UE 1 via cell-specific or UE-specific RRC signaling (e.g., SIB or RRC Reconfiguration message).

The L1/L2 signaling in step 1001 may contain or carry an integer value that directly indicates the offset defining the start point of the extended ON duration. Alternatively, the start point of the extended ON duration may be predefined in the 3GPP specifications. In this case, the L1/L2 signaling in step 1001 does not need to indicate the offset. The start point of the extended ON duration may be the first slot following the slot in which the cell DTX ON duration ends. In this context, a slot refers to a slot defined in the 5G NR frame structure.

In some implementations, a method or mechanism for forcibly terminating the cell DTX extended ON duration may be introduced. For example, if the RAN node 2 wishes to forcibly terminate the current cell DTX extended ON duration, it may transmit L1/L2 signaling indicating forcible termination during the current extended ON duration. In response to the L1/L2 signaling, the UE 1 may terminate the extended ON duration.

The operation of the UE 1 and RAN node 2 described with reference to Fig. 5 with respect to cell DTX can be similarly applied to extend the cell DRX ON duration. Specifically, the UE 1 receives L1/L2 signaling from the network (e.g., RAN node 2) that triggers the extension of the ON duration of the current DRX cycle. The L1/L2 signaling indicates one or both of the length of the cell DRX extended ON duration and the offset that defines the start point of the extended ON duration. The UE 1 extends the ON duration of the current cell DRX cycle based on the L1/L2 signaling.

### Second Example Embodiment

An example configuration of a radio communication system according to the present example embodiment is the same as the example configuration described with reference to Fig. 1. This example embodiment provides details on how a UE operates CDRX-related timers (e.g., CDRX ON duration timer, CDRX inactivity timer, CDRX downlink retransmission timer, and CDRX uplink retransmission timer) during an extended cell DTX ON duration.

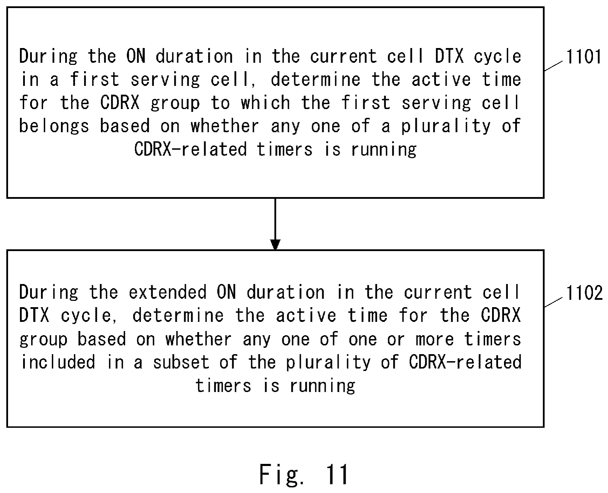

Fig. 11 shows an example of the operation of the UE 1. In step 1101, during the ON duration in the current cell DTX cycle in a first serving cell, the UE 1 determines the active time for the CDRX group to which the first serving cell belongs based on whether any one of a plurality of CDRX-related timers is running. In step 1102, during the extended ON duration in the current cell DTX cycle, the UE 1 determines the active time for the CDRX group based on whether any one of one or more timers included in a subset of the above-mentioned CDRX-related timers is running. In other words, during the extended ON duration in the cell DTX cycle, the UE 1 can only operate some of the multiple CDRX-related timers that can operate during the ON duration in the cell DTX cycle. The subset of timers that can operate during the extended ON duration may be predefined in the 3GPP specifications. Alternatively, the subset of timers that can operate during the extended ON duration may be indicated by a cell DTX configuration sent in advance from the RAN node 2 to the UE 1 via cell-specific or UE-specific RRC signaling.

Specifically, the multiple CDRX-related timers that can operate during the ON duration may include at least a CDRX ON duration timer (i.e., drx-onDurationTimer), the CDRX inactivity timer (i.e., drx-InactivityTimer), the CDRX retransmission timer for downlink (i.e., drx-RetransmissionTimerDL), and the CDRX retransmission timer for uplink (i.e., drx-RetransmissionTimerUL). In contrast, the subset that can operate during the extended ON duration may include only the CDRX retransmission timer for uplink. Alternatively, the subset that can operate during the extended ON duration may include only the CDRX inactivity timer and the CDRX retransmission timer for uplink. Alternatively, the subset that can operate during the extended ON duration may include only the CDRX retransmission timer for downlink. Alternatively, the subset that can operate during the extended ON duration may include only the CDRX inactivity timer and the CDRX retransmission timer for downlink. Alternatively, the subset that can operate during the extended ON duration may include only the CDRX inactivity timer, the CDRX retransmission timer for uplink, and the CDRX retransmission timer for downlink.

As described above, the extension of the ON duration, i.e., the activation of the extended ON duration, may be triggered by L1/L2 signaling sent from the RAN node 2 to the UE 1. In this case, the details of the L1/L2 signaling may be the same as those described in the first example embodiment. For example, the L1/L2 signaling may indicate one or both of the length of the cell DTX extended ON duration and the offset defining the start point of the extended ON duration. The L1/L2 signaling may be transmitted in a predetermined time slot within the ON duration of the current cell DTX cycle. The predetermined time slot may be the last time slot of the ON duration.

The RAN node 2 may provide cell DTX configuration information to the UE 1 via cell-common or UE-specific RRC signaling. The cell DTX configuration information may indicate the length of the cell DTX extended ON duration.

The operation of the UE 1 explained with reference to Fig. 11 contributes to aligning or coordinating the cell DTX and UE CDRX operations.

### Third Example Embodiment

An example configuration of a radio communication system according to the present example embodiment is the same as the example configuration described with reference to Fig. 1. This example embodiment provides details on how a UE operates CDRX-related timers (e.g., CDRX ON duration timer, CDRX inactivity timer, CDRX downlink retransmission timer, and CDRX uplink retransmission timer) during an extended cell DTX ON duration.

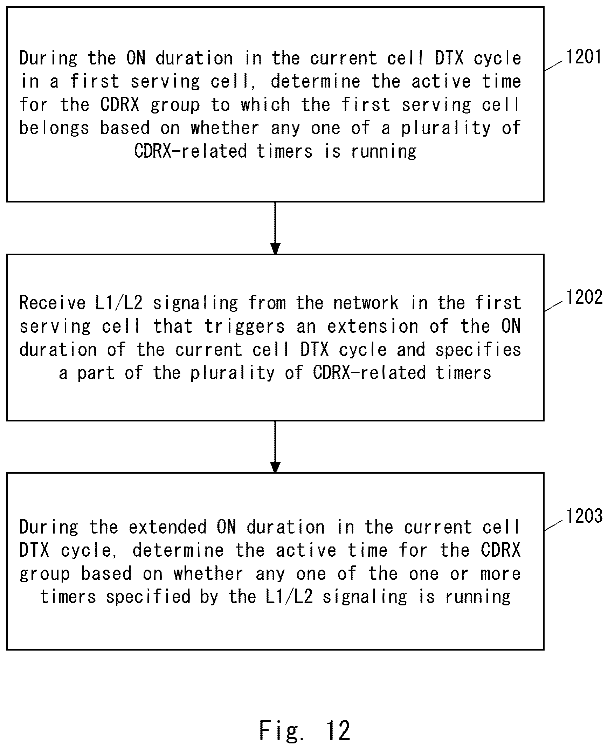

Fig. 12 shows an example of the operation of the UE 1. Step 1201 is the same as step 1101 in Fig. 11. That is, in step 1201, during the ON duration in the current cell DTX cycle in a first serving cell, the UE 1 determines the active time for the CDRX group to which the first serving cell belongs based on whether any one of a plurality of CDRX-related timers is running.

In step 1202, the UE 1 receives L1/L2 signaling that triggers an extension of the ON duration of the current cell DTX cycle from the network (e.g., RAN node 2) in the first serving cell. Additionally, the L1/L2 signaling specifies a part of the plurality of CDRX-related timers, i.e., a part of the plurality of CDRX-related timers that can operate during the cell DTX ON duration. The L1/L2 signaling may be cell-specific or UE-specific.

In step 1203, the UE 1 starts the extended ON duration within the current cell DTX cycle after the ON duration based on the L1/L2 signaling in step 1202. During the extended ON duration, the UE 1 determines the active time for the CDRX group based on whether any one of the one or more timers specified by the L1/L2 signaling in step 1202 is running. In other words, similar to the operation explained with reference to Fig. 11, according to the operation shown in Fig. 12, during the extended ON duration within the cell DTX cycle, the UE 1 is allowed to operate only some of the CDRX-related timers that can operate during the ON duration within the cell DTX cycle. However, in the example of Fig. 12, the subset of timers that can operate within the extended ON duration is dynamically specified by L1/L2 signaling that triggers the activation of the extended ON duration.

Specifically, the multiple CDRX-related timers that can operate during the ON duration may include at least a CDRX ON duration timer (i.e., drx-onDurationTimer), the CDRX inactivity timer (i.e., drx-InactivityTimer), the CDRX retransmission timer for downlink (i.e., drx-RetransmissionTimerDL), and the CDRX retransmission timer for uplink (i.e., drx-RetransmissionTimerUL). The signaling in step 1202 may indicate that one, two, or all of the CDRX inactivity timer, the CDRX retransmission timer for downlink, and the CDRX retransmission timer for uplink are taken into account to define the active time for the CDRX group during the extended ON duration. Alternatively, the signaling in step 1202 may indicate that one, two, three, or all of the CDRX ON duration timer, the CDRX inactivity timer, the CDRX retransmission timer for downlink, and the CDRX retransmission timer for uplink are taken into account to define the active time for the CDRX group during the extended ON duration.

The L1/L2 signaling in step 1202 may contain information or a data element having a bit length equal to the number of CDRX-related timer types whose operation may be permitted during the extended cell DTX ON duration. Each bit of the information or data element may be associated with a respective one of the CDRX-related timer types that may be permitted. For example, if the value of each bit is set to 1, it indicates that the operation of the corresponding CDRX-related timer is allowed during the extended ON duration, and if the value is set to 0, it indicates that the operation of the corresponding CDRX-related timer is not allowed during the extended ON duration. In an example, the CDRX-related timers that may be allowed to operate during the extended ON duration may be three types: the CDRX inactive timer, the CDRX retransmission timer for downlink, and the CDRX retransmission timer for uplink. In this case, the information or data element is 3 bits long, and each bit is associated with a respective one of these three types of CDRX-related timers. In another example, the CDRX-related timers that can be allowed to operate during the extended ON duration may include a total of four types, including the three types mentioned above and the CDRX ON duration timer. In this case, the information or data elements are 4 bits long, and each bit is associated with a respective one of these four types of CDRX-related timers.

Other details of the L1/L2 signaling in step 1202 may be as described in the first example embodiment. For example, the L1/L2 signaling may indicate at least one of the length of the cell DTX extended ON duration and the offset defining the start point of the extended ON duration. The L1/L2 signaling may be transmitted in a predetermined time slot within the ON duration of the current cell DTX cycle. The predetermined time slot may be the last time slot of the ON duration.

The RAN node 2 may provide cell DTX configuration information to the UE 1 via cell-common or UE-specific RRC signaling. The cell DTX configuration information may indicate the length of the cell DTX extended ON duration.

The operation of the UE 1 and the corresponding operation of the RAN node 2 described with reference to Fig. 12 contribute to aligning or coordinating the cell DTX and UE CDRX operations. In addition, according to the operation of the UE 1 and the corresponding operation of the RAN node 2 described with reference to Fig. 12, the RAN node 2 can specify, per cell, the types of CDRX-related timers that can operate during the extended cell DTX ON duration. Furthermore, in the case where the L1/L2 signaling in step 1202 is UE-specific, the RAN node 2 can specify the types of CDRX-related timers that can operate during the extended cell DTX ON duration on a per-UE basis within the cell.

### Fourth Example Embodiment

An example configuration of a radio communication system according to the present example embodiment is the same as the example configuration described with reference to Fig. 1. This example embodiment provides a method for delivering downlink data to the UE 1 in a timely manner in a case where the downlink data for the UE 1 arrives at the RAN node 2 near the end of the cell DTX ON duration and, according to the CDRX configuration, neither timer that determines the CDRX active time is scheduled to execute at the UE 1 after the cell DTX ON duration.

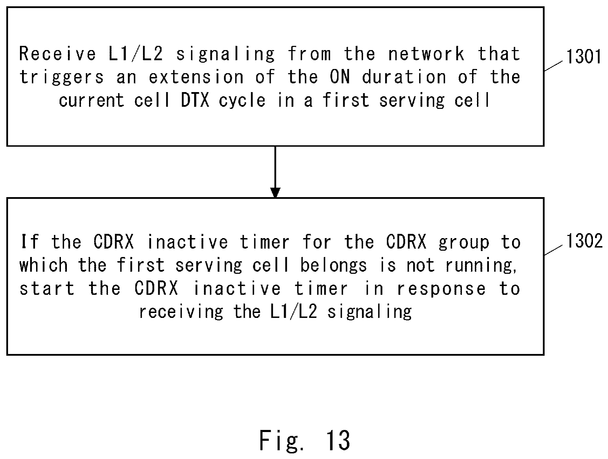

Fig. 13 shows an example of the operation of the UE 1. In step 1301, the UE 1 receives L1/L2 signaling from the network (e.g., RAN node 2) that triggers the extension of the ON duration of the current cell DTX cycle in the first serving cell. Note that the L1/L2 signaling in step 1301 differs from a DCI (i.e., scheduling DCI) indicating a new uplink or downlink transmission, or a PDCCH carrying such a DCI. In other words, the L1/L2 signaling in step 1301 differs from a DCI indicating a scheduling assignment of radio resources for uplink or downlink transmission, or a PDCCH carrying such a DCI.

The L1/L2 signaling in step 1301 may be UE-specific. UE-specific L1 signaling may be a DCI format with CRC bits scrambled by a UE-specific RNTI (e.g., C-RNTI). In other words, UE-specific L1 signaling may be a PDCCH carrying CRC bits scrambled by a UE-specific RNTI. UE-specific L2 signaling may be a MAC CE transmitted in a PDSCH scheduled in a DCI format with CRC bits scrambled by a UE-specific RNTI.

For example, if downlink data for the UE 1 arrives at the RAN node 2 near the end of the cell DTX ON duration and, according to the CDRX configuration of the UE 1, neither timer that determines the CDRX active time is scheduled to execute at the UE 1 after the cell DTX ON duration, then the RAN node 2 may transmit the L1/L2 signaling in step 1301.

In step 1302, if the CDRX inactivity timer (i.e., drx-InactivityTimer) for the CDRX group to which the first serving cell belongs is not running, the UE 1 starts the CDRX inactivity timer in response to receiving the L1/L2 signaling. Additionally, in step 1302, the UE 1 starts the extended ON duration within the current cell DTX cycle after the ON duration, based on the L1/L2 signaling.

The details of the L1/L2 signaling in step 1301 may be similar to those described in the first example embodiment. For example, the L1/L2 signaling may indicate at least one of the length of the cell DTX extended ON duration and the offset defining the start point of the extended ON duration. The L1/L2 signaling may be transmitted in a predetermined time slot within the ON duration of the current cell DTX cycle. The predetermined time slot may be the last time slot of the ON duration.

The RAN node 2 may provide cell DTX configuration information to the UE 1 via cell-common or UE-specific RRC signaling. The cell DTX configuration information may indicate the length of the cell DTX extended ON duration.

According to the operation of the UE 1 and the corresponding operation of the RAN node 2 described with reference to Fig. 13, the RAN node 2 can prompt the UE 1 to start the CDRX inactivity timer by transmitting L1/L2 signaling that triggers the extension of the ON duration of the current cell DTX cycle to the UE 1. As mentioned above, this L1/L2 signaling differs from L1/L2 signaling (i.e., scheduling DCI) that indicates a new downlink transmission (i.e., downlink resource allocation for a new PDSCH transmission). In order to send a scheduling DCI indicating a new downlink transmission to the UE 1, the RAN node 2 is required to complete the scheduling of PDSCH radio resources for sending downlink data to the UE 1. In contrast, the RAN node 2 can send the L1/L2 signaling in step 1301 immediately without waiting for the completion of scheduling for downlink data to the UE 1. For earlier transmission to the UE 1, the signaling in step 1301 may preferably be L1 signaling (e.g., DCI, PDDCH), because scheduling of DCI or PDCCH carrying DCI is not required, unlike a MAC CE transmitted in PDSCH.

For example, if downlink data for the UE 1 arrives near the end of the cell DTX ON duration, the RAN node 2 may immediately transmit the L1/L2 signaling in step 1301, thereby extending the cell DTX ON duration and activating the CDRX inactivity timer of the UE 1. Thereafter, the RAN node 2 may transmit a DCI and a PDCCH indicating a scheduling assignment for a new PDSCH transmission to the UE 1 during the extended cell DTX ON duration and while the CDRX inactivity timer is running. In this way, even if downlink data for the UE 1 arrives at the RAN node 2 near the end of the cell DTX ON duration and neither timer that determines the CDRX active time according to the CDRX configuration will be executed at the UE 1 after the cell DTX ON duration, the RAN node 2 can deliver the downlink data to the UE 1 in a timely manner.

### Fifth Example Embodiment

An example configuration of a radio communication system according to the present example embodiment is the same as the example configuration described with reference to Fig. 1. This example embodiment provides a method for restricting the type of uplink transmission allowed to UEs during the extended ON duration in a case where the cell DRX ON duration is extended.

In this example embodiment, if an uplink transmission on radio resources permitted by a dynamic uplink grant received by the UE 1 in RRC_CONNECTED mode during the ON duration of the activated cell DRX occurs during the cell DRX OFF duration following the ON duration, the UE 1 performs the uplink transmission during the OFF duration. The UE 1 in RRC_CONNECTED mode stops other uplink transmissions during the cell DRX off duration, except for the uplink transmission based on the dynamic uplink grant. The uplink transmission based on the dynamic uplink grant includes a PUSCH transmission on radio resources dynamically allocated by the dynamic uplink grant. On the other hand, the other uplink transmissions include, for example, a PUSCH transmission on radio resources semi-statically allocated by a configured grant.

According to the operation of the UE 1 described above and the corresponding operation of the RAN node 2, the cell DRX ON duration can be extended on a per-UE basis. Additionally, according to these operations, a timer for measuring the extension time of the cell DRX ON duration is not required, and it is also unnecessary to transmit new L1/L2 signaling from the RAN node 2 to the UE 1 to trigger the extension of the cell DRX ON duration.

### Sixth Example Embodiment

An example configuration of a radio communication system according to the present example embodiment is the same as the example configuration described with reference to Fig. 1. This example embodiment provides a method for restricting the type of uplink transmission allowed to UEs during the extended ON duration in a case where the cell DRX ON duration is extended.

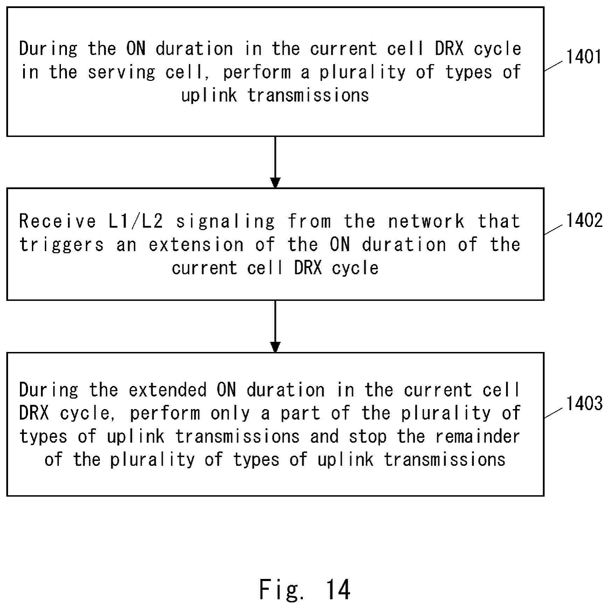

Fig. 14 shows an example of the operation of the UE 1. In step 1401, the UE 1 performs a plurality of types of uplink transmissions during the ON duration in the current cell DRX cycle in the serving cell. For example, the plurality of types of uplink transmissions include transmission of a scheduling request, PUSCH transmission based on a dynamic grant, PUSCH transmission based on a configured grant (PUSCH transmission on radio resources semi-statically allocated by a configured grant), and PUSCH retransmission.

In step 1402, the UE 1 receives L1/L2 signaling from the network (e.g., RAN node 2) that triggers an extension of the ON duration of the current cell DRX cycle. The L1/L2 signaling may be cell-specific. Details of the L1/L2 signaling in step 1402 may be similar to those described in the first example embodiment.

In step 1403, during the extended ON duration in the current cell DRX cycle, the UE 1 performs only a part of the plurality of types of uplink transmissions and stops the remainder of the plurality of types of uplink transmissions. For example, the part of the plurality of types of uplink transmissions does not include at least one of transmission of a scheduling request, PUSCH transmission based on a dynamic grant, PUSCH transmission based on a configured grant, or PUSCH retransmission.

The types of uplink transmissions allowed during the extended ON duration of the cell DRX may be predefined in the 3GPP specifications. Alternatively, this may be indicated by a cell DRX configuration sent in advance from the RAN node 2 to UE 1 via cell-specific or UE-specific RRC signaling.

According to the operation of the UE 1 described above and the corresponding operation of the RAN node 2, it is possible to restrict the types of uplink transmissions allowed to UEs during the extended cell DRX ON duration.

### Seventh Example Embodiment

An example configuration of a radio communication system according to the present example embodiment is the same as the example configuration described with reference to Fig. 1. This example embodiment provides a method for restricting the type of uplink transmission allowed to UEs during the extended ON duration in a case where the cell DRX ON duration is extended.

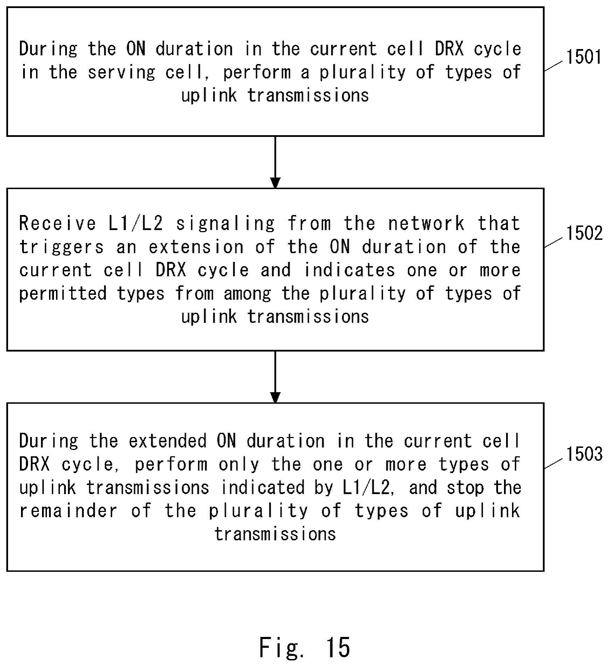

Fig. 15 shows an example of the operation of the UE 1. Step 1501 is the same as step 1401 in Fig. 14. That is, in step 1501, the UE 1 performs a plurality of types of uplink transmissions during the ON duration in the current cell DRX cycle in the serving cell. For example, the plurality of types of uplink transmissions include transmission of a scheduling request, PUSCH transmission based on a dynamic grant, PUSCH transmission based on a configured grant (PUSCH transmission on radio resources semi-statically allocated by a configured grant), and PUSCH retransmission.

Step 1502 is similar to step 1402 in Fig. 14. Specifically, in step 1502, the UE 1 receives L1/L2 signaling from the network (e.g., RAN node 2) that triggers an extension of the ON duration of the current cell DRX cycle. Furthermore, the L1/L2 signaling in step 1502 indicates one or more permitted types from among the plurality of types of uplink transmissions. The L1/L2 signaling may be cell-specific. As described above, cell-specific L1 signaling may be a DCI format with CRC bits scrambled by a cell-specific RNTI, or a PDCCH carrying such a DCI format. In other words, cell-specific L1 signaling may be a PDCCH carrying CRC bits scrambled by a cell-specific RNTI. Cell-specific L2 signaling may be a MAC CE transmitted on a PDSCH scheduled by a DCI format with CRC bits scrambled by a cell-specific RNTI.

The L1/L2 signaling in step 1502 may contain information or a data element having a bit length equal to the number of plurality of types of uplink transmissions that may be permitted in the extended cell DRX ON duration. Each bit of the information or data element may be associated with a respective one of the types of uplink transmissions that may be permitted. For example, if the value of each bit is set to 1, it indicates that the corresponding uplink transmission is allowed during the extended ON duration, and if the value is set to 0, it indicates that the corresponding uplink transmission is not allowed during the extended ON duration. In an example, four types of uplink transmissions may be permitted: transmission of a scheduling request, PUSCH transmission based on a dynamic grant, PUSCH transmission based on a configured grant, and PUSCH retransmission. In this case, the information or data element is four bits long, and each bit is associated with a respective one of the four uplink transmission types.

In step 1503, during the extended ON duration in the current cell DRX cycle, the UE 1 performs only one or more types of uplink transmissions indicated by the L1/L2 signaling in step 1502 and stops the remainder of the plurality of types of uplink transmissions.

According to the operation of the UE 1 described above and the corresponding operation of the RAN node 2, it is possible to restrict the types of uplink transmissions allowed to UEs during the extended cell DRX ON duration. Additionally, according to the operation of the UE 1 and the corresponding operation of the RAN node 2 explained with reference to Fig. 15, the RAN node 2 can dynamically specify the uplink transmission type permitted during the extended cell DRX ON duration, per cell DRX cycle.

### Eighth Example Embodiment

An example configuration of a radio communication system according to the present example embodiment is the same as the example configuration described with reference to Fig. 1. This example embodiment provides details of the cell DRX pattern design.

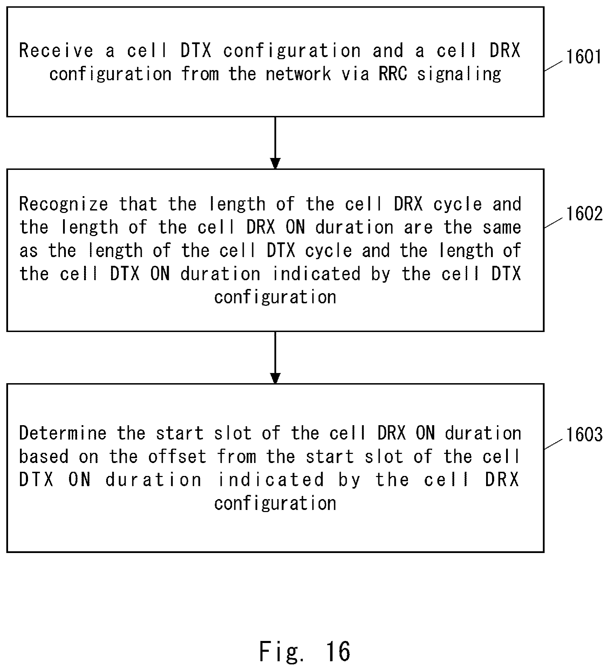

Fig. 16 shows an example of the operation of the UE 1. In step 1601, the UE 1 receives cell DTX and cell DRX configurations from the network (e.g., RAN node 2) via RRC signaling. The cell DTX configuration indicates the length of the cell DTX cycle and the length of the cell DTX ON duration. The cell DTX configuration may also indicate the start slot of the cell DTX cycle. The start slot of the cell DTX cycle may be indicated by a start offset. The start offset defines the subframe at which the cell DTX cycle begins. The cell DRX configuration indicates the offset of the start slot of the cell DRX ON duration from the start slot of the cell DTX ON duration.

In step 1602, the UE 1 recognizes that the length of the cell DRX cycle and the length of the cell DRX ON duration are the same as the length of the cell DTX cycle and the length of the cell DTX ON duration, respectively, as indicated by the cell DTX configuration. In step 1603, the UE 1 determines the start slot of the cell DRX ON duration based on the offset from the start slot of the cell DTX ON duration indicated by the cell DRX configuration.

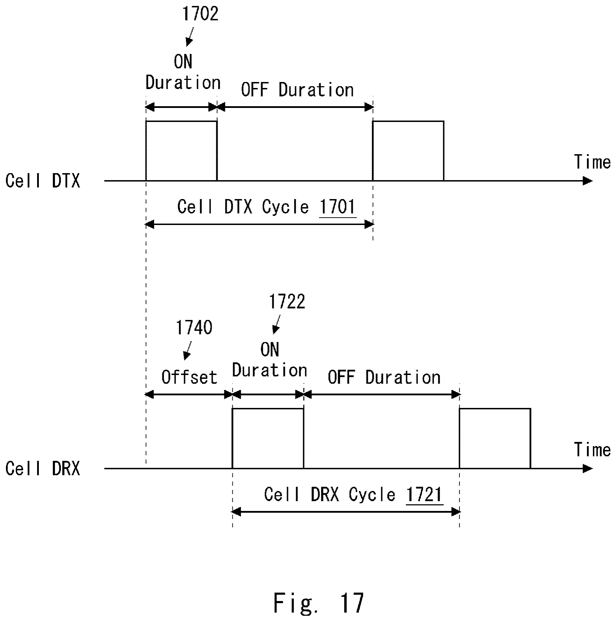

Fig. 17 shows the relationship between the cell DRX pattern and the cell DTX pattern in the present example embodiment. The length of the cell DTX cycle 1701 and the length of the cell DTX ON duration 1702 are indicated by the cell DTX configuration. The cell DRX pattern is determined depending on the cell DTX pattern. The length of the cell DRX cycle 1721 and the length of the cell DRX ON duration 1722 are equal to the length of the cell DTX cycle 1701 and the length of the cell DTX ON duration 1702, respectively. The start point of the cell DRX cycle 1721 is specified by an offset 1740 from the start point of the cell DTX cycle 1701. The offset 1740 is indicated by the cell DRX configuration.

In response to an extension of the cell DTX ON duration triggered by a network (e.g., RAN node 2), the UE 1 may extend the cell DRX ON duration in addition to the cell DTX ON duration. The extended cell DRX ON duration may be the same length as the extended cell DTX ON duration.

In this example embodiment, the cell DRX pattern is configured based on or dependent on the cell DTX configuration. There is a time difference (delay, gap, or difference) between the time slot in which a dynamic uplink grant is transmitted in the downlink for PUSCH transmission and the time slot in which PUSCH transmission is performed in the uplink based on the grant. Therefore, using a cell DRX pattern configured based on the cell DTX configuration is appropriate. Additionally, this reduces the signaling overhead for transmitting the cell DRX configuration compared to a cell DRX configuration that is independent and separate from a cell DTX configuration.

### Ninth Example Embodiment

An example configuration of a radio communication system according to the present example embodiment is the same as the example configuration described with reference to Fig. 1. This example embodiment provides details of the cell DRX pattern design.

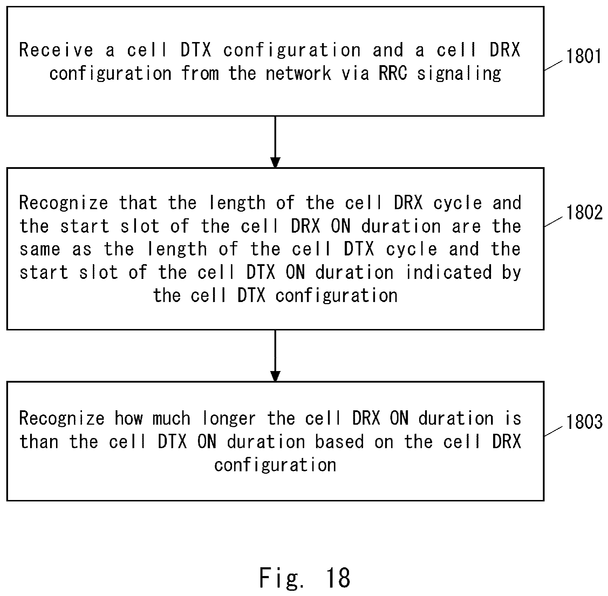

Fig. 18 shows an example of the operation of the UE 1. In step 1801, the UE 1 receives cell DTX and cell DRX configurations from the network (e.g., RAN node 2) via RRC signaling. The cell DTX configuration indicates the length of the cell DTX cycle and the length of the cell DTX ON duration. The cell DTX configuration also indicates the start slot of the cell DTX cycle. The start slot of the cell DTX cycle can be indicated by a start offset. The start offset defines the subframe at which the cell DTX cycle begins. The cell DRX configuration indicates how much longer the cell DRX ON duration is than the cell DTX ON duration.

In step 1802, the UE 1 recognizes that the length of the cell DRX cycle and the start slot of the cell DRX ON duration are the same as the length of the cell DTX cycle and the start slot of the cell DTX ON duration, respectively, as indicated by the cell DTX configuration. In step 1803, the UE 1 recognizes how much longer the cell DRX ON duration is than the cell DTX ON duration, based on the cell DRX configuration.

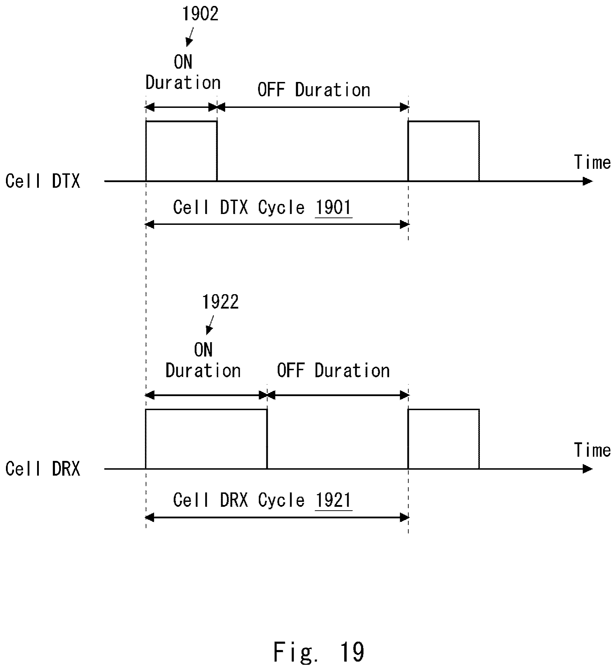

Fig. 19 shows the relationship between the cell DRX pattern and the cell DTX pattern in this example embodiment. The length and start slot of the cell DTX cycle 1901, and the length of the cell DTX ON duration 1902 are indicated by the cell DTX configuration. The cell DRX pattern is determined depending on the cell DTX pattern. The length and start slot of the cell DRX cycle 1921 are the same as the length and start slot of the cell DTX cycle 1901. The length of the cell DRX ON duration 1922 is indicated by the cell DRX configuration.

In response to an extension of the cell DTX ON duration triggered by a network (e.g., RAN node 2), the UE 1 may extend the cell DRX ON duration in addition to the cell DTX ON duration. The extended cell DRX ON duration may be the same length as the extended cell DTX ON duration.

In this example embodiment, the cell DRX pattern is configured based on or dependent on the cell DTX configuration. This reduces the signaling overhead for transmitting the cell DRX configuration compared to a cell DRX configuration that is independent and separate from a cell DTX configuration.

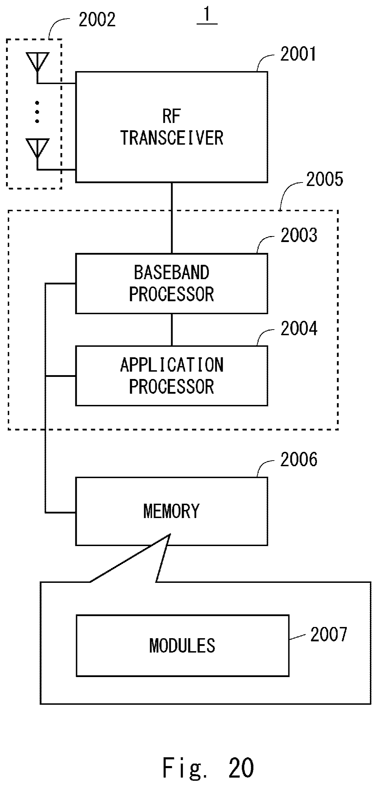

The following describes example configurations of the UE 1 and the RAN node 2 according to the multiple example embodiments described above. Fig. 20 shows a block diagram of an example configuration of the UE 1. The Radio Frequency (RF) transceiver 2001 performs analog RF signal processing to communicate with the RAN node 2. The RF transceiver 2001 may include a plurality of transceivers. The analog RF signal processing performed by the RF transceiver 2001 includes frequency up-conversion, frequency downconversion, and amplification. The RF transceiver 2001 is coupled with an antenna array 2002 and a baseband processor 2003. The RF transceiver 2001 receives modulated symbol data (or OFDM symbol data) from the baseband processor 2003, generates a transmission RF signal, and supplies the transmission RF signal to the antenna array 2002. The RF transceiver 2001 also generates a baseband received signal based on a received RF signal received by the antenna array 2002, and supplies the baseband received signal to the baseband processor 2003. The RF transceiver 2001 may include an analog beamformer circuit for beamforming. The analog beamformer circuit includes, for example, multiple phase shifters and multiple power amplifiers.

The baseband processor 2003 performs digital baseband signal processing (data-plane processing) and control-plane processing for radio communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) generation of OFDM symbol data (baseband OFDM signal) using Inverse Fast Fourier Transform (IFFT) and so on. On the other hand, the control-plane processing includes communication management of layer 1 (e.g., transmission power control), layer 2 (e.g., radio resource management, and hybrid automatic repeat request (HARQ) processing), and layer 3 (e.g., signaling related to attach, mobility, and call management).

For example, the digital baseband signal processing performed by the baseband processor 2003 may include signal processing for the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. The control plane processing performed by the baseband processor 2003 may include processing of the Non-Access Stratum (NAS) protocol, the Radio Resource Control (RRC) protocol, MAC Control Elements (CEs), and Downlink Control Information (DCIs).

The baseband processor 2003 may perform Multiple Input Multiple Output (MIMO) encoding and precoding for beamforming.

The baseband processor 2003 may include a modem processor (e.g., a digital signal processor (DSP)) that performs digital baseband signal processing and a protocol stack processor (e.g., a central processing unit (CPU) or a micro processing unit (MPU)) that performs control plane processing. In this case, the protocol stack processor that performs control plane processing may be integrated with an application processor 2004 described later.

The application processor 2004 is also referred to as a CPU, MPU, microprocessor, or processor core. The application processor 2004 may include a plurality of processors (a plurality of processor cores). The application processor 2004 executes a system software program (operating system (OS)) and various application programs (e.g., call application, web browser, mailer, camera operation application, music player application) read from a memory 2006 or from another memory, thereby realizing various functions of the UE 1.

In some implementations, as shown by the dashed line (2005) in Fig. 20, the baseband processor 2003 and the application processor 2004 may be integrated on a single chip. In other words, the baseband processor 2003 and the application processor 2004 may be implemented as a single System on Chip (SoC) device 2005. The SoC device may also be referred to as a system large-scale integration (LSI) or chipset.

The memory 2006 is a volatile memory or a non-volatile memory or a combination thereof. The memory 2006 may include a plurality of physically independent memory devices. The volatile memory is, for example, Static Random Access Memory (SRAM), Dynamic RAM (DRAM), or a combination thereof. The non-volatile memory is, for example, Mask Read Only Memory (MROM), Electrically Erasable Programmable ROM (EEPROM), flash memory, or a hard disk drive, or any combination thereof. For example, the memory 2006 may include an external memory device that is accessible by the baseband processor 2003, the application processor 2004, and the SoC 2005. The memory 2006 may include an internal memory device that is integrated into the baseband processor 2003, the application processor 2004, or the SoC 2005. In addition, the memory 2006 may include memory within a Universal Integrated Circuit Card (UICC).

The memory 2006 may store one or more software modules (or computer programs) 2007 that include a set of instructions and data for performing the processing by the UE 1 described in the above example embodiments. In some implementations, the baseband processor 2003 or the application processor 2004 may be configured to read and execute the software modules 2007 from the memory 2006, thereby performing the processing of the UE 1 as described in the example embodiments with reference to the drawings.

The control plane processing and operations performed by the UE 1 described in the above example embodiment can be implemented by elements other than the RF transceiver 2001 and the antenna array 2002, namely at least one of the baseband processor 2003 and the application processor 2004, and the memory 2006 that stores the software modules 2007.

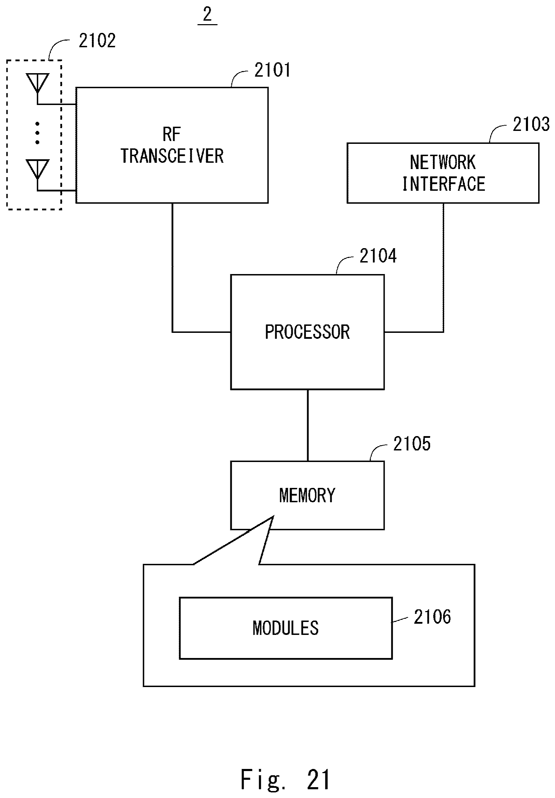

Fig. 21 is a block diagram showing an example of the configuration of the RAN node 2. Referring to Fig. 21, the RAN node 2 includes a Radio Frequency (RF) transceiver 2101, a network interface 2103, a processor 2104, and a memory 2105. The RF transceiver 2101 performs analog RF signal processing to communicate with the UEs 1. The RF transceiver 2101 may include a plurality of transceivers. The RF transceiver 2101 is coupled to an antenna array 2102 and the processor 2104. The RF transceiver 2101 receives modulated symbol data from the processor 2104, generates a transmission RF signal, and supplies the transmission RF signal to the antenna array 2102. The RF transceiver 2101 generates a baseband reception signal based on a reception RF signal received by the antenna array 2102 and supplies the baseband reception signal to the processor 2104. The RF transceiver 2101 may include an analog beamformer circuit for beamforming. The analog beamformer circuit includes, for example, a plurality of phase shifters and a plurality of power amplifiers.

The network interface 2103 is used to communicate with network nodes (e.g., other RAN nodes, as well as control nodes and transfer nodes in the core network). For example, the network interface 2103 may include a network interface card (NIC) conforming to the IEEE 802.3 series.

The processor 2104 performs digital baseband signal processing (data plane processing) and control plane processing for radio communication. The processor 2104 may include a plurality of processors. For example, the processor 2104 may include a modem processor (e.g., a digital signal processor (DSP)) that performs digital baseband signal processing and a protocol stack processor (e.g., a central processing unit (CPU) or a micro processing unit (MPU)) that performs control plane processing. The processor 2104 may include a digital beamformer module for beamforming. The digital beamformer module may include a Multiple Input Multiple Output (MIMO) encoder and precoder.

The memory 2105 is composed of a combination of a volatile memory and a non-volatile memory. The volatile memory is, for example, Static Random Access Memory (SRAM) or Dynamic RAM (DRAM) or a combination thereof. The non-volatile memory is Mask Read Only Memory (MROM), Electrically Erasable Programmable ROM (EEPROM), flash memory, or a hard disk drive, or any combination thereof. The memory 2105 may include storage located separate from the processor 2104. In this case, the processor 2104 may access the memory 2105 via a network interface 2103 or another I/O interface.

The memory 2105 may store one or more software modules (computer programs) 2106 containing instructions and data for performing the processing by the RAN node 2 described in the above example embodiments. In some implementations, the processor 2104 may be configured to execute the software modules 2106 read from the memory 2105, thereby performing the processing of the RAN node 2 described in the above example embodiments.

In a case where the RAN node 2 is a CU (e.g., gNB-CU) or a CU-CP (e.g., gNB-CU-CP), the RAN node 2 may not include the RF transceiver 2101 (and the antenna array 2102).

As explained using Figs. 20 and 21, each of the processors of the UE 1 and RAN node 2 in the above example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered trademark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustic, or other form of propagated signals.

The above example embodiments are merely examples of the application of the technical concepts obtained by the inventors. These technical concepts are not limited to the above example embodiments and may be modified in various ways.

For example, the whole or part of the example embodiments disclosed above can be described as, but not limited to, the following supplementary notes. Of course, some or all of the elements (e.g., configurations and functionality) described in the Supplementary Notes directed to a device (e.g., radio terminal, radio access network node) may also be described as or in Supplementary Notes directed to methods and programs. For example, some or all of the elements listed in Supplementary Notes 2-7 that depend on Supplementary Note 1 may also be listed as Supplementary Notes that depend on Supplementary Note 15 or 17 with the same dependency as Supplementary Notes 2-7. Similarly, some or all of the elements listed in Supplementary Notes 9-14 that depend on Supplementary Note 8 may also be listed as Supplementary Notes that depend on Supplementary Note 16 or 18 with the same dependency as Supplementary Notes 9-14. Some or all of the elements described in a Supplementary Note may be applicable to various hardware, software, storage for storing software, systems, and methods.

### (Supplementary Note 1)

A radio terminal comprising:
means for receiving, from a network, first Layer 1 or Layer 2 signaling that triggers an extension of an ON duration of a current discontinuous transmission (DTX) or discontinuous reception (DRX) cycle of cell DTX or cell DRX; and
means for extending the ON duration of the current DTX or DRX cycle based on the first Layer 1 or Layer 2 signaling,
wherein the first Layer 1 or Layer 2 signaling indicates one or both of a length of an extended ON duration and an offset that defines a start point of the extended ON duration.

### (Supplementary Note 2)

The radio terminal according to Supplementary Note 1, wherein
the means for receiving is further adapted to receive configuration information for the cell DTX or cell DRX from the network via a radio terminal-specific or cell-specific Radio Resource Control (RRC) signaling,
the configuration information indicates a plurality of candidate values for the length of the extended ON duration, and
the first Layer 1 or Layer 2 signaling specifies one of the plurality of candidate values.

### (Supplementary Note 3)

The radio terminal according to Supplementary Note 1 or 2, wherein the means for receiving is adapted to receive the first Layer 1 or Layer 2 signaling in a predetermined time slot in the ON duration of the current DTX or DRX cycle.

### (Supplementary Note 4)

The radio terminal according to Supplementary Note 3, wherein the predetermined time slot is a last time slot of the ON duration of the current DTX or DRX cycle.

### (Supplementary Note 5)

The radio terminal according to any one of Supplementary Notes 1 to 4, wherein the first Layer 1 or Layer 2 signaling is a Downlink Control Information (DCI) format with Cyclic Redundancy Check (CRC) bits scrambled by a radio terminal-specific or cell-specific Radio Network Temporary Identifier (RNTI).

### (Supplementary Note 6)

The radio terminal according to any one of Supplementary Notes 1 to 4, wherein the first Layer 1 or Layer 2 signaling is a Medium Access Control (MAC) Control Element (CE) transmitted on a Physical Downlink Shared Channel (PDSCH) scheduled by a Downlink Control Information (DCI) format with CRC bits scrambled by a radio terminal-specific or cell-specific Radio Network Temporary Identifier (RNTI).

### (Supplementary Note 7)

The radio terminal according to any one of Supplementary Notes 1 to 6, further comprising:
means for receiving second Layer 1 or Layer 2 signaling indicating a forced termination of the extended ON duration in the extended ON duration; and
means for terminating the extended ON duration in response to the second Layer 1 or Layer 2 signaling.

### (Supplementary Note 8)

A radio access network node comprising:
means for transmitting to one or more radio terminals in a cell, first Layer 1 or Layer 2 signaling that triggers an extension of an ON duration of a current discontinuous transmission (DTX) or discontinuous reception (DRX) cycle of cell DTX or cell DRX,
wherein the first Layer 1 or Layer 2 signaling indicates one or both of a length of an extended ON duration and an offset that defines a start point of the extended ON duration.

### (Supplementary Note 9)

The radio access network node according to Supplementary Note 8, wherein
the means for transmitting is adapted to transmit configuration information for the cell DTX or cell DRX via a radio terminal-specific or cell-specific Radio Resource Control (RRC) signaling,
the configuration information indicates a plurality of candidate values for the length of the extended ON duration, and
the first Layer 1 or Layer 2 signaling specifies one of the plurality of candidate values.

### (Supplementary Note 10)

The radio access network node according to Supplementary Note 8 or 9, wherein the means for transmitting is adapted to transmit the first Layer 1 or Layer 2 signaling in a predetermined time slot in the ON duration of the current DTX or DRX cycle.

### (Supplementary Note 11)

The radio access network node according to Supplementary Note 10, wherein the predetermined time slot is a last time slot of the ON duration of the current DTX or DRX cycle.

### (Supplementary Note 12)

The radio access network node according to any one of Supplementary Notes 8 to 11, wherein the first Layer 1 or Layer 2 signaling is a Downlink Control Information (DCI) format with Cyclic Redundancy Check (CRC) bits scrambled by a radio terminal-specific or cell-specific Radio Network Temporary Identifier (RNTI).

### (Supplementary Note 13)

The radio access network node according to any one of Supplementary Notes 8 to 11, wherein the first Layer 1 or Layer 2 signaling is a Medium Access Control (MAC) Control Element (CE) transmitted on a Physical Downlink Shared Channel (PDSCH) scheduled by a Downlink Control Information (DCI) format with CRC bits scrambled by a radio terminal-specific or cell-specific Radio Network Temporary Identifier (RNTI).

### (Supplementary Note 14)

The radio access network node according to any one of Supplementary Notes 8 to 13, further comprising means for transmitting second Layer 1 or Layer 2 signaling indicating a forced termination of the extended ON duration in the extended ON duration.

### (Supplementary Note 15)

A method performed by a radio terminal, comprising:
receiving, from a network, first Layer 1 or Layer 2 signaling that triggers an extension of an ON duration of a current discontinuous transmission (DTX) or discontinuous reception (DRX) cycle of cell DTX or cell DRX; and
extending the ON duration of the current DTX or DRX cycle based on the first Layer 1 or Layer 2 signaling,
wherein the first Layer 1 or Layer 2 signaling indicates one or both of a length of an extended ON duration and an offset that defines a start point of the extended ON duration.

### (Supplementary Note 16)

A method performed by a radio access network node, comprising:
transmitting to one or more radio terminals in a cell, first Layer 1 or Layer 2 signaling that triggers an extension of an ON duration of a current discontinuous transmission (DTX) or discontinuous reception (DRX) cycle of cell DTX or cell DRX,
wherein the first Layer 1 or Layer 2 signaling indicates one or both of a length of an extended ON duration and an offset that defines a start point of the extended ON duration.

### (Supplementary Note 17)

A program for causing a computer to perform a method for a radio terminal, the method comprising:
receiving, from a network, first Layer 1 or Layer 2 signaling that triggers an extension of an ON duration of a current discontinuous transmission (DTX) or discontinuous reception (DRX) cycle of cell DTX or cell DRX; and
extending the ON duration of the current DTX or DRX cycle based on the first Layer 1 or Layer 2 signaling,
wherein the first Layer 1 or Layer 2 signaling indicates one or both of a length of an extended ON duration and an offset that defines a start point of the extended ON duration.

### (Supplementary Note 18)

A program for causing a computer to perform a method for a radio access network node,
the method comprising transmitting to one or more radio terminals in a cell, first Layer 1 or Layer 2 signaling that triggers an extension of an ON duration of a current discontinuous transmission (DTX) or discontinuous reception (DRX) cycle of cell DTX or cell DRX,
wherein the first Layer 1 or Layer 2 signaling indicates one or both of a length of an extended ON duration and an offset that defines a start point of the extended ON duration.

### (Supplementary Note 19)

A radio terminal comprising:
means for, during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running; and
means for, during an extended ON duration in the current cell DTX cycle, determining the active time for the CDRX group based on whether any one of one or more timers included in a subset of the plurality of CDRX-related timers is running.

### (Supplementary Note 20)

The radio terminal according to Supplementary Note 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX retransmission timer for uplink.

### (Supplementary Note 21)

The radio terminal according to Supplementary Note 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX inactivity timer and the CDRX retransmission timer for uplink.

### (Supplementary Note 22)

The radio terminal according to Supplementary Note 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX retransmission timer for downlink.

### (Supplementary Note 23)

The radio terminal according to Supplementary Note 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX inactivity timer and the CDRX retransmission timer for downlink.

### (Supplementary Note 24)

The radio terminal according to Supplementary Note 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX inactivity timer, the CDRX retransmission timer for uplink, and the CDRX retransmission timer for downlink.

### (Supplementary Note 25)

The radio terminal according to any one of Supplementary Notes 19 to 24, further comprising:
means for receiving, in the first serving cell from a network, Layer 1 or Layer 2 signaling that triggers an extension of the ON duration of the current DTX cycle; and
means for starting the extended ON duration within the current cell DTX cycle after the ON duration based on the Layer 1 or Layer 2 signaling.

### (Supplementary Note 26)

The radio terminal according to Supplementary Note 25, wherein the Layer 1 or Layer 2 signaling indicates one or both of a length of the extended ON duration and an offset that defines a start point of the extended ON duration.

### (Supplementary Note 27)

The radio terminal according to Supplementary Note 25, wherein
the means for receiving is further adapted to receive configuration information for the cell DTX from the network via a radio terminal-specific or cell-specific Radio Resource Control (RRC) signaling,
the configuration information indicates the length of the extended ON duration.

### (Supplementary Note 28)

The radio terminal according to Supplementary Note 25, wherein
the means for receiving is further adapted to receive configuration information for the cell DTX from the network via a radio terminal-specific or cell-specific Radio Resource Control (RRC) signaling,
the configuration information indicates a plurality of candidate values for the length of the extended ON duration, and
the Layer 1 or Layer 2 signaling specifies one of the plurality of candidate values.

### (Supplementary Note 29)

A method performed by a radio terminal, comprising:
during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running; and
during an extended ON duration in the current cell DTX cycle, determining the active time for the CDRX group based on whether any one of one or more timers included in a subset of the plurality of CDRX-related timers is running.

### (Supplementary Note 30)

A radio terminal comprising:
means for, during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running;
means for receiving, in the first serving cell from a network, Layer 1 or Layer 2 signaling that triggers an extension of the ON duration of the current cell DTX cycle and specifies a part of the plurality of CDRX-related timers; and
means for, during an extended ON duration in the current cell DTX cycle, determining the active time for the CDRX group based on whether any one of one or more timers specified by the Layer 1 or Layer 2 signaling is running.

### (Supplementary Note 31)

The radio terminal according to Supplementary Note 30, wherein
the plurality of CDRX-related timers include at least a CDRX ON duration timer, a CDRX inactivity timer, a CDRX retransmission timer for downlink, and a CDRX retransmission timer for uplink, and
the Layer 1 or Layer 2 signaling indicates that one, two, or all of the CDRX inactivity timer, the CDRX retransmission timer for downlink, and the CDRX retransmission timer for uplink are taken into account to define the active time for the CDRX group during the extended ON duration.

### (Supplementary Note 32)

The radio terminal according to Supplementary Note 30 or 31, further comprising means for starting the extended ON duration within the current cell DTX cycle after the ON duration based on the Layer 1 or Layer 2 signaling.

### (Supplementary Note 33)

The radio terminal according to Supplementary Note 32, wherein the Layer 1 or Layer 2 signaling indicates one or both of a length of the extended ON duration and an offset that defines a start point of the extended ON duration.

### (Supplementary Note 34)

The radio terminal according to Supplementary Note 32, wherein
the means for receiving is further adapted to receive configuration information for the cell DTX from the network via a radio terminal-specific or cell-specific Radio Resource Control (RRC) signaling, and
the configuration information indicates a length of the extended ON duration.

### (Supplementary Note 35)

The radio terminal according to Supplementary Note 32, wherein
the means for receiving is further adapted to receive configuration information for the cell DTX from the network via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

### (Supplementary Note 36)

A radio access network node comprising:
means for transmitting, in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling specifies a part of a plurality of connected mode discontinuous reception (CDRX) related timers,
the plurality of CDRX-related timers are used by a radio terminal to determine, during the ON duration in the current cell DTX cycle in the first serving cell, an active time for a CDRX group to which one or more serving cells including the first serving cell belong, based on whether any one of the plurality of CDRX-related timers is running, and
the Layer 1 or Layer 2 signaling causes the radio terminal to determine, during an extended ON duration in the current cell DTX cycle, the active time for the CDRX group based on whether any one of one or more timers specified by the Layer 1 or Layer 2 signaling is running.

### (Supplementary Note 37)

The radio access network node according to Supplementary Note 36, wherein
the plurality of CDRX-related timers include at least a CDRX ON duration timer, a CDRX inactivity timer, a CDRX retransmission timer for downlink, and a CDRX retransmission timer for uplink, and
the Layer 1 or Layer 2 signaling indicates that one, two, or all of the CDRX inactivity timer, the CDRX retransmission timer for downlink, and the CDRX retransmission timer for uplink are taken into account to define the active time for the CDRX group during the extended ON duration.

### (Supplementary Note 38)

The radio access network node according to Supplementary Note 36 or 37, wherein the Layer 1 or Layer 2 signaling indicates one or both of a length of the extended ON duration and an offset that defines a start point of the extended ON duration.

### (Supplementary Note 39)

The radio access network node according to Supplementary Note 36 or 37, wherein
the means for transmitting is further adapted to transmit configuration information for the cell DTX via a radio terminal-specific or cell-specific Radio Resource Control (RRC) signaling, and
the configuration information indicates a length of the extended ON duration.

### (Supplementary Note 40)

The radio access network node according to Supplementary Note 36 or 37, wherein
the means for transmitting is further adapted to transmit configuration information for the cell DTX via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

### (Supplementary Note 41)

A method performed by a radio terminal, comprising:
during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running;
receiving, in the first serving cell from a network, Layer 1 or Layer 2 signaling that triggers an extension of the ON duration of the current cell DTX cycle and specifies a part of the plurality of CDRX-related timers; and
during an extended ON duration in the current cell DTX cycle, determining the active time for the CDRX group based on whether any one of one or more timers specified by the Layer 1 or Layer 2 signaling is running.

### (Supplementary Note 42)

A method performed by a radio access network node, comprising:
transmitting, in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling specifies a part of a plurality of connected mode discontinuous reception (CDRX) related timers,
the plurality of CDRX-related timers are used by a radio terminal to determine, during the ON duration in the current cell DTX cycle in the first serving cell, an active time for a CDRX group to which one or more serving cells including the first serving cell belong, based on whether any one of the plurality of CDRX-related timers is running, and
the Layer 1 or Layer 2 signaling causes the radio terminal to determine, during an extended ON duration in the current cell DTX cycle, the active time for the CDRX group based on whether any one of one or more timers specified by the Layer 1 or Layer 2 signaling is running.

### (Supplementary Note 43)

A radio terminal comprising:
means for receiving, from a network, Layer 1 or Layer 2 signaling that triggers an extension of an ON duration of a current cell discontinuous transmission (DTX) cycle of cell DTX in a first serving cell; and
means for, if a connected mode discontinuous reception (CDRX) inactive timer for a CDRX group to which one or more serving cells including the first serving cell belong is not running, starting the CDRX inactive timer in response to receiving the Layer 1 or Layer 2 signaling.

### (Supplementary Note 44)

The radio terminal according to Supplementary Note 43, wherein the Layer 1 or Layer 2 signaling differs from a Physical Downlink Control Channel (PDCCH) that indicates a new uplink or downlink transmission.

### (Supplementary Note 45)

The radio terminal according to Supplementary Note 43, wherein the Layer 1 or Layer 2 signaling differs from a Physical Downlink Control Channel (PDCCH) that indicates a scheduling assignment of radio resources for uplink or downlink transmission.

### (Supplementary Note 46)

The radio terminal according to any one of Supplementary Notes 44 to 45, further comprising means for starting an extended ON duration within the current cell DTX cycle after the ON duration based on the Layer 1 or Layer 2 signaling.

### (Supplementary Note 47)

The radio terminal according to Supplementary Note 46, wherein the Layer 1 or Layer 2 signaling indicates one or both of a length of the extended ON duration and an offset that defines a start point of the extended ON duration.

### (Supplementary Note 48)

The radio terminal according to Supplementary Note 46, wherein
the means for receiving is further adapted to receive configuration information for the cell DTX from the network via a radio terminal-specific or cell-specific Radio Resource Control (RRC) signaling, and
the configuration information indicates a length of the extended ON duration.

### (Supplementary Note 49)

The radio terminal according to Supplementary Note 46, wherein
the means for receiving is further adapted to receive configuration information for the cell DTX from the network via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

### (Supplementary Note 50)

A radio access network node comprising:
means for transmitting, to a radio terminal in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling causes the radio terminal to, if a connected mode discontinuous reception (CDRX) inactive timer for a CDRX group to which one or more serving cells including the first serving cell belong is not running, start the CDRX inactive timer in response to receiving the Layer 1 or Layer 2 signaling.

### (Supplementary Note 51)

The radio access network node according to Supplementary Note 50, wherein the Layer 1 or Layer 2 signaling differs from a Physical Downlink Control Channel (PDCCH) that indicates a new uplink or downlink transmission.

### (Supplementary Note 52)

The radio access network node according to Supplementary Note 50, wherein the Layer 1 or Layer 2 signaling differs from a Physical Downlink Control Channel (PDCCH) that indicates a scheduling assignment of radio resources for uplink or downlink transmission.

### (Supplementary Note 53)

The radio access network node according to any one of Supplementary Notes 50 to 52, wherein the Layer 1 or Layer 2 signaling causes the radio terminal to start an extended ON duration within the current cell DTX cycle after the ON duration based on the Layer 1 or Layer 2 signaling.

### (Supplementary Note 54)

The radio access network node according to Supplementary Note 53, wherein the Layer 1 or Layer 2 signaling indicates one or both of a length of the extended ON duration and an offset that defines a start point of the extended ON duration.

### (Supplementary Note 55)

The radio access network node according to Supplementary Note 53, wherein
the means for transmitting is further adapted to transmit configuration information for the cell DTX via a radio terminal-specific or cell-specific Radio Resource Control (RRC) signaling, and
the configuration information indicates a length of the extended ON duration.

### (Supplementary Note 56)

The radio access network node according to Supplementary Note 53, wherein
the means for transmitting is further adapted to transmit configuration information for the cell DTX via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

### (Supplementary Note 57)

A method performed by a radio terminal, comprising:
receiving, from a network, Layer 1 or Layer 2 signaling that triggers an extension of an ON duration of a current cell discontinuous transmission (DTX) cycle of cell DTX in a first serving cell; and
if a connected mode discontinuous reception (CDRX) inactive timer for a CDRX group to which one or more serving cells including the first serving cell belong is not running, starting the CDRX inactive timer in response to receiving the Layer 1 or Layer 2 signaling.

### (Supplementary Note 58)

A method performed by a radio access network node, comprising:
transmitting, to a radio terminal in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling causes the radio terminal to, if a connected mode discontinuous reception (CDRX) inactive timer for a CDRX group to which one or more serving cells including the first serving cell belong is not running, start the CDRX inactive timer in response to receiving the Layer 1 or Layer 2 signaling.

### (Supplementary Note 59)

A radio terminal comprising:
means for, if an uplink transmission on a radio resource permitted by a dynamic uplink grant received by the radio terminal in RRC_CONNECTED mode during an ON duration of an activated cell discontinuous reception (DRX) occurs during an off duration of the cell DRX following the ON duration, performing the uplink transmission in the off duration; and
means for stopping other uplink transmissions during the off duration, except for the uplink transmission based on the dynamic uplink grant, in a case where the radio terminal is in the RRC_CONNECTED mode.

### (Supplementary Note 60)

The radio terminal according to Supplementary Note 59, wherein
the uplink transmission based on the dynamic uplink grant includes a Physical Uplink Shared Channel (PUSCH) transmission on the radio resource dynamically allocated by the dynamic uplink grant, and
the other uplink transmissions include a PUSCH transmission on a radio resource that is semi-statically allocated by a configured grant.

### (Supplementary Note 61)

A method performed by a radio terminal comprising:
if an uplink transmission on a radio resource permitted by a dynamic uplink grant received by the radio terminal in RRC_CONNECTED mode during an ON duration of an activated cell discontinuous reception (DRX) occurs during an off duration of the cell DRX following the ON duration, performing the uplink transmission in the off duration; and
stopping other uplink transmissions during the off duration, except for the uplink transmission based on the dynamic uplink grant, in a case where the radio terminal is in the RRC_CONNECTED mode.

### (Supplementary Note 62)

A radio terminal comprising:
means for performing a plurality of types of uplink transmission in an ON duration within a current cell discontinuous reception (DRX) cycle of cell DRX in a serving cell;
means for receiving, from a network, Layer 1 and Layer 2 signaling that triggers an extension of the ON duration of the current cell DRX cycle; and
means for, during an extended ON duration in the current cell DRX cycle, performing only a part of the plurality of types of uplink transmission and stopping a remainder of the plurality of types of uplink transmission.

### (Supplementary Note 63)

The radio terminal according to Supplementary Note 62, wherein
the plurality of types of uplink transmission include transmission of a scheduling request, Physical Uplink Shared Channel (PUSCH) transmission based on a dynamic grant, PUSCH transmission based on a configured grant, and PUSCH retransmission, and
the part of the plurality of types of uplink transmission does not include at least one of transmission of a scheduling request, PUSCH transmission based on a dynamic grant, PUSCH transmission based on a configured grant, or PUSCH retransmission.

### (Supplementary Note 64)

The radio terminal according to Supplementary Note 62 or 63, wherein the Layer 1 or Layer 2 signaling is cell-specific.

### (Supplementary Note 65)

A method performed by a radio terminal, comprising:
performing a plurality of types of uplink transmission in an ON duration within a current cell discontinuous reception (DRX) cycle of cell DRX in a serving cell;
receiving, from a network, Layer 1 and Layer 2 signaling that triggers an extension of the ON duration of the current cell DRX cycle; and
during an extended ON duration in the current cell DRX cycle, performing only a part of the plurality of types of uplink transmission and stopping a remainder of the plurality of types of uplink transmission.

### (Supplementary Note 66)

A radio terminal comprising:
means for performing a plurality of types of uplink transmission in an ON duration within a current cell discontinuous reception (DRX) cycle of cell DRX in a serving cell;
means for receiving, from a network, Layer 1 and Layer 2 signaling that triggers an extension of the ON duration of the current cell DRX cycle and indicates one or more allowed types among the plurality of types of uplink transmission; and
means for, during an extended ON duration in the current cell DRX cycle, performing only the one or more types of uplink transmission indicated by the Layer 1 and Layer 2 signaling and stopping a remainder of the plurality of types of uplink transmission.

### (Supplementary Note 67)

The radio terminal according to Supplementary Note 66, wherein the plurality of types of uplink transmission include transmission of a scheduling request, Physical Uplink Shared Channel (PUSCH) transmission based on a dynamic grant, PUSCH transmission based on a configured grant, and PUSCH retransmission.

### (Supplementary Note 68)

The radio terminal according to Supplementary Note 66 or 67, wherein the Layer 1 or Layer 2 signaling is cell-specific.

### (Supplementary Note 69)

A radio access network node comprising:
means for transmitting Layer 1 or Layer 2 signaling within a serving cell to trigger an extension of an ON duration of a current cell discontinuous reception (DRX) cycle of cell DRX in the serving cell, wherein
the Layer 1 or Layer 2 signaling indicates one or more allowed types among a plurality of types of uplink transmission that can be performed by a radio terminal within the ON duration, and
the Layer 1 or Layer 2 signaling causes the radio terminal to, during an extended ON duration in the current cell DRX cycle, perform only the one or more types of uplink transmission indicated by the Layer 1 and Layer 2 signaling and stop a remainder of the plurality of types of uplink transmission.

### (Supplementary Note 70)

A method performed by a radio terminal, comprising:
performing a plurality of types of uplink transmission in an ON duration within a current cell discontinuous reception (DRX) cycle of cell DRX in a serving cell;
receiving, from a network, Layer 1 and Layer 2 signaling that triggers an extension of the ON duration of the current cell DRX cycle and indicates one or more allowed types among the plurality of types of uplink transmission; and
during an extended ON duration in the current cell DRX cycle, performing only the one or more types of uplink transmission indicated by the Layer 1 and Layer 2 signaling and stopping a remainder of the plurality of types of uplink transmission.

### (Supplementary Note 71)

A method performed by a radio access network node, comprising:
transmitting Layer 1 or Layer 2 signaling within a serving cell to trigger an extension of an ON duration of a current cell discontinuous reception (DRX) cycle of cell DRX in the serving cell, wherein
the Layer 1 or Layer 2 signaling indicates one or more allowed types among a plurality of types of uplink transmission that can be performed by a radio terminal within the ON duration, and
the Layer 1 or Layer 2 signaling causes the radio terminal to, during an extended ON duration in the current cell DRX cycle, perform only the one or more types of uplink transmission indicated by the Layer 1 and Layer 2 signaling and stop a remainder of the plurality of types of uplink transmission.

### (Supplementary Note 72)

A radio terminal comprising:
means for receiving from a network, via radio terminal-specific or cell-specific Radio Resource Control (RRC) signaling, a first configuration related to cell discontinuous transmission (DTX) and a second configuration related to cell discontinuous reception (DRX); and
means for determining a pattern of the cell DRX using the first configuration and the second configuration, wherein
the first configuration indicates a length of a cycle of the cell DTX and a length of an ON duration of the cell DTX,
the means for determining is adapted to recognize that a length of a cycle of the cell DRX and a length of an ON duration of the cell DRX are the same as the length of the cycle of the cell DTX and the length of the ON duration of the cell DTX, respectively, as indicated by the first configuration, and
the second configuration indicates an offset for a start slot of the ON duration of the cell DRX from a start slot of the ON duration of the cell DTX.

### (Supplementary Note 73)

The radio terminal according to Supplementary Note 72, further comprising means for extending the ON duration of the cell DRX in response to an extension of the ON duration of the cell DTX triggered by the network.

### (Supplementary Note 74)

A method performed by a radio terminal, comprising:
receiving from a network, via radio terminal-specific or cell-specific Radio Resource Control (RRC) signaling, a first configuration related to cell discontinuous transmission (DTX) and a second configuration related to cell discontinuous reception (DRX); and
determining a pattern of the cell DRX using the first configuration and the second configuration, wherein
the first configuration indicates a length of a cycle of the cell DTX and a length of an ON duration of the cell DTX,
the determining comprises recognizing that a length of a cycle of the cell DRX and a length of an ON duration of the cell DRX are the same as the length of the cycle of the cell DTX and the length of the ON duration of the cell DTX, respectively, as indicated by the first configuration, and
the second configuration indicates an offset for a start slot of the ON duration of the cell DRX from a start slot of the ON duration of the cell DTX.

### (Supplementary Note 75)

A radio terminal comprising:
means for receiving from a network, via radio terminal-specific or cell-specific Radio Resource Control (RRC) signaling, a first configuration related to cell discontinuous transmission (DTX) and a second configuration related to cell discontinuous reception (DRX); and
means for determining a pattern of the cell DRX using the first configuration and the second configuration, wherein
the first configuration indicates a length of a cycle of the cell DTX and a start slot of an ON duration of the cell DTX,
the means for determining is adapted to recognize that a length of a cycle of the cell DRX and a start slot of an ON duration of the cell DRX are the same as the length of the cycle of the cell DTX and the start slot of the ON duration of the cell DTX, respectively, as indicated by the first configuration, and
the second configuration indicates how much longer the ON duration of the cell DRX is than the ON duration of the cell DTX.

### (Supplementary Note 76)

The radio terminal according to Supplementary Note 75, further comprising means for extending the ON duration of the cell DRX in response to an extension of the ON duration of the cell DTX triggered by the network.

### (Supplementary Note 77)

A method performed by a radio terminal, comprising:
receiving from a network, via radio terminal-specific or cell-specific Radio Resource Control (RRC) signaling, a first configuration related to cell discontinuous transmission (DTX) and a second configuration related to cell discontinuous reception (DRX); and
determining a pattern of the cell DRX using the first configuration and the second configuration, wherein
the first configuration indicates a length of a cycle of the cell DTX and a start slot of an ON duration of the cell DTX,
the determining comprises recognizing that a length of a cycle of the cell DRX and a start slot of an ON duration of the cell DRX are the same as the length of the cycle of the cell DTX and the start slot of the ON duration of the cell DTX, respectively, as indicated by the first configuration, and
the second configuration indicates how much longer the ON duration of the cell DRX is than the ON duration of the cell DTX.

This application is based upon and claims the benefit of priority from Japanese Patent Application No. 2023-062268, filed on April 6, 2023, the disclosure of which is incorporated herein in its entirety by reference.

### Reference Signs List

- 1: UE
- 2: RAN node
- 21: Cell
- 2003: Baseband processor
- 2004: Application processor
- 2006: Memory
- 2007: Modules
- 2104: Processor
- 2105: Memory
- 2106: Modules

## Claims

1. A radio terminal comprising:
means for receiving, from a network, first Layer 1 or Layer 2 signaling that triggers an extension of an ON duration of a current discontinuous transmission (DTX) or discontinuous reception (DRX) cycle of cell DTX or cell DRX; and
means for extending the ON duration of the current DTX or DRX cycle based on the first Layer 1 or Layer 2 signaling,
wherein the first Layer 1 or Layer 2 signaling indicates one or both of a length of an extended ON duration and an offset that defines a start point of the extended ON duration.

2. The radio terminal according to claim 1, wherein
the means for receiving is further adapted to receive configuration information for the cell DTX or cell DRX from the network via a radio terminal-specific or cell-specific Radio Resource Control (RRC) signaling,
the configuration information indicates a plurality of candidate values for the length of the extended ON duration, and
the first Layer 1 or Layer 2 signaling specifies one of the plurality of candidate values.

3. The radio terminal according to claim 1 or 2, wherein the means for receiving is adapted to receive the first Layer 1 or Layer 2 signaling in a predetermined time slot in the ON duration of the current DTX or DRX cycle.

4. The radio terminal according to claim 3, wherein the predetermined time slot is a last time slot of the ON duration of the current DTX or DRX cycle.

5. The radio terminal according to any one of claims 1 to 4, wherein the first Layer 1 or Layer 2 signaling is a Downlink Control Information (DCI) format with Cyclic Redundancy Check (CRC) bits scrambled by a radio terminal-specific or cell-specific Radio Network Temporary Identifier (RNTI).

6. The radio terminal according to any one of claims 1 to 4, wherein the first Layer 1 or Layer 2 signaling is a Medium Access Control (MAC) Control Element (CE) transmitted on a Physical Downlink Shared Channel (PDSCH) scheduled by a Downlink Control Information (DCI) format with CRC bits scrambled by a radio terminal-specific or cell-specific Radio Network Temporary Identifier (RNTI).

7. The radio terminal according to any one of claims 1 to 6, further comprising:
means for receiving second Layer 1 or Layer 2 signaling indicating a forced termination of the extended ON duration in the extended ON duration; and
means for terminating the extended ON duration in response to the second Layer 1 or Layer 2 signaling.

8. A radio access network node comprising:
means for transmitting to one or more radio terminals in a cell, first Layer 1 or Layer 2 signaling that triggers an extension of an ON duration of a current discontinuous transmission (DTX) or discontinuous reception (DRX) cycle of cell DTX or cell DRX,
wherein the first Layer 1 or Layer 2 signaling indicates one or both of a length of an extended ON duration and an offset that defines a start point of the extended ON duration.

9. The radio access network node according to claim 8, wherein
the means for transmitting is adapted to transmit configuration information for the cell DTX or cell DRX via a radio terminal-specific or cell-specific Radio Resource Control (RRC) signaling,
the configuration information indicates a plurality of candidate values for the length of the extended ON duration, and
the first Layer 1 or Layer 2 signaling specifies one of the plurality of candidate values.

10. The radio access network node according to claim 8 or 9, wherein the means for transmitting is adapted to transmit the first Layer 1 or Layer 2 signaling in a predetermined time slot in the ON duration of the current DTX or DRX cycle.

11. The radio access network node according to claim 10, wherein the predetermined time slot is a last time slot of the ON duration of the current DTX or DRX cycle.

12. The radio access network node according to any one of claims 8 to 11, wherein the first Layer 1 or Layer 2 signaling is a Downlink Control Information (DCI) format with Cyclic Redundancy Check (CRC) bits scrambled by a radio terminal-specific or cell-specific Radio Network Temporary Identifier (RNTI).

13. The radio access network node according to any one of claims 8 to 11, wherein the first Layer 1 or Layer 2 signaling is a Medium Access Control (MAC) Control Element (CE) transmitted on a Physical Downlink Shared Channel (PDSCH) scheduled by a Downlink Control Information (DCI) format with CRC bits scrambled by a radio terminal-specific or cell-specific Radio Network Temporary Identifier (RNTI).

14. The radio access network node according to any one of claims 8 to 13, further comprising means for transmitting second Layer 1 or Layer 2 signaling indicating a forced termination of the extended ON duration in the extended ON duration.

15. A method performed by a radio terminal, comprising:
receiving, from a network, first Layer 1 or Layer 2 signaling that triggers an extension of an ON duration of a current discontinuous transmission (DTX) or discontinuous reception (DRX) cycle of cell DTX or cell DRX; and
extending the ON duration of the current DTX or DRX cycle based on the first Layer 1 or Layer 2 signaling,
wherein the first Layer 1 or Layer 2 signaling indicates one or both of a length of an extended ON duration and an offset that defines a start point of the extended ON duration.

16. A method performed by a radio access network node, comprising:
transmitting to one or more radio terminals in a cell, first Layer 1 or Layer 2 signaling that triggers an extension of an ON duration of a current discontinuous transmission (DTX) or discontinuous reception (DRX) cycle of cell DTX or cell DRX,
wherein the first Layer 1 or Layer 2 signaling indicates one or both of a length of an extended ON duration and an offset that defines a start point of the extended ON duration.

17. A program for causing a computer to perform a method for a radio terminal, the method comprising:
receiving, from a network, first Layer 1 or Layer 2 signaling that triggers an extension of an ON duration of a current discontinuous transmission (DTX) or discontinuous reception (DRX) cycle of cell DTX or cell DRX; and
extending the ON duration of the current DTX or DRX cycle based on the first Layer 1 or Layer 2 signaling,
wherein the first Layer 1 or Layer 2 signaling indicates one or both of a length of an extended ON duration and an offset that defines a start point of the extended ON duration.

18. A program for causing a computer to perform a method for a radio access network node,
the method comprising transmitting to one or more radio terminals in a cell, first Layer 1 or Layer 2 signaling that triggers an extension of an ON duration of a current discontinuous transmission (DTX) or discontinuous reception (DRX) cycle of cell DTX or cell DRX,
wherein the first Layer 1 or Layer 2 signaling indicates one or both of a length of an extended ON duration and an offset that defines a start point of the extended ON duration.

19. A radio terminal comprising:
means for, during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running; and
means for, during an extended ON duration in the current cell DTX cycle, determining the active time for the CDRX group based on whether any one of one or more timers included in a subset of the plurality of CDRX-related timers is running.

20. The radio terminal according to claim 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX retransmission timer for uplink.

21. The radio terminal according to claim 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX inactivity timer and the CDRX retransmission timer for uplink.

22. The radio terminal according to claim 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX retransmission timer for downlink.

23. The radio terminal according to claim 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX inactivity timer and the CDRX retransmission timer for downlink.

24. The radio terminal according to claim 19, wherein
the plurality of CDRX-related timers include at least a CDRX ON duration timer, a CDRX inactivity timer, a CDRX retransmission timer for downlink, and a CDRX retransmission timer for uplink, and
the subset includes only the CDRX inactivity timer, the CDRX retransmission timer for uplink, and the CDRX retransmission timer for downlink.

25. The radio terminal according to any one of claims 19 to 24, further comprising:
means for receiving, in the first serving cell from a network, Layer 1 or Layer 2 signaling that triggers an extension of the ON duration of the current DTX cycle; and
means for starting the extended ON duration within the current cell DTX cycle after the ON duration based on the Layer 1 or Layer 2 signaling.

26. The radio terminal according to claim 25, wherein the Layer 1 or Layer 2 signaling indicates one or both of a length of the extended ON duration and an offset that defines a start point of the extended ON duration.

27. The radio terminal according to claim 25, wherein
the means for receiving is further adapted to receive configuration information for the cell DTX from the network via a radio terminal-specific or cell-specific Radio Resource Control (RRC) signaling,
the configuration information indicates the length of the extended ON duration.

28. The radio terminal according to claim 25, wherein
the means for receiving is further adapted to receive configuration information for the cell DTX from the network via a radio terminal-specific or cell-specific Radio Resource Control (RRC) signaling,
the configuration information indicates a plurality of candidate values for the length of the extended ON duration, and
the Layer 1 or Layer 2 signaling specifies one of the plurality of candidate values.

29. A method performed by a radio terminal, comprising:
during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running; and
during an extended ON duration in the current cell DTX cycle, determining the active time for the CDRX group based on whether any one of one or more timers included in a subset of the plurality of CDRX-related timers is running.

30. A radio terminal comprising:
means for, during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running;
means for receiving, in the first serving cell from a network, Layer 1 or Layer 2 signaling that triggers an extension of the ON duration of the current cell DTX cycle and specifies a part of the plurality of CDRX-related timers; and
means for, during an extended ON duration in the current cell DTX cycle, determining the active time for the CDRX group based on whether any one of one or more timers specified by the Layer 1 or Layer 2 signaling is running.

31. The radio terminal according to claim 30, wherein
the plurality of CDRX-related timers include at least a CDRX ON duration timer, a CDRX inactivity timer, a CDRX retransmission timer for downlink, and a CDRX retransmission timer for uplink, and
the Layer 1 or Layer 2 signaling indicates that one, two, or all of the CDRX inactivity timer, the CDRX retransmission timer for downlink, and the CDRX retransmission timer for uplink are taken into account to define the active time for the CDRX group during the extended ON duration.

32. The radio terminal according to claim 30 or 31, further comprising means for starting the extended ON duration within the current cell DTX cycle after the ON duration based on the Layer 1 or Layer 2 signaling.

33. The radio terminal according to claim 32, wherein the Layer 1 or Layer 2 signaling indicates one or both of a length of the extended ON duration and an offset that defines a start point of the extended ON duration.

34. The radio terminal according to claim 32, wherein
the means for receiving is further adapted to receive configuration information for the cell DTX from the network via a radio terminal-specific or cell-specific Radio Resource Control (RRC) signaling, and
the configuration information indicates a length of the extended ON duration.

35. The radio terminal according to claim 32, wherein
the means for receiving is further adapted to receive configuration information for the cell DTX from the network via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

36. A radio access network node comprising:
means for transmitting, in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling specifies a part of a plurality of connected mode discontinuous reception (CDRX) related timers,
the plurality of CDRX-related timers are used by a radio terminal to determine, during the ON duration in the current cell DTX cycle in the first serving cell, an active time for a CDRX group to which one or more serving cells including the first serving cell belong, based on whether any one of the plurality of CDRX-related timers is running, and
the Layer 1 or Layer 2 signaling causes the radio terminal to determine, during an extended ON duration in the current cell DTX cycle, the active time for the CDRX group based on whether any one of one or more timers specified by the Layer 1 or Layer 2 signaling is running.

37. The radio access network node according to claim 36, wherein
the plurality of CDRX-related timers include at least a CDRX ON duration timer, a CDRX inactivity timer, a CDRX retransmission timer for downlink, and a CDRX retransmission timer for uplink, and
the Layer 1 or Layer 2 signaling indicates that one, two, or all of the CDRX inactivity timer, the CDRX retransmission timer for downlink, and the CDRX retransmission timer for uplink are taken into account to define the active time for the CDRX group during the extended ON duration.

38. The radio access network node according to claim 36 or 37, wherein the Layer 1 or Layer 2 signaling indicates one or both of a length of the extended ON duration and an offset that defines a start point of the extended ON duration.

39. The radio access network node according to claim 36 or 37, wherein
the means for transmitting is further adapted to transmit configuration information for the cell DTX via a radio terminal-specific or cell-specific Radio Resource Control (RRC) signaling, and
the configuration information indicates a length of the extended ON duration.

40. The radio access network node according to claim 36 or 37, wherein
the means for transmitting is further adapted to transmit configuration information for the cell DTX via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

41. A method performed by a radio terminal, comprising:
during an ON duration in a current cell discontinuous transmission (DTX) cycle of cell DTX in a first serving cell, determining an active time for a connected mode discontinuous reception (CDRX) group to which one or more serving cells including the first serving cell belong, based on whether any one of a plurality of CDRX-related timers is running;
receiving, in the first serving cell from a network, Layer 1 or Layer 2 signaling that triggers an extension of the ON duration of the current cell DTX cycle and specifies a part of the plurality of CDRX-related timers; and
during an extended ON duration in the current cell DTX cycle, determining the active time for the CDRX group based on whether any one of one or more timers specified by the Layer 1 or Layer 2 signaling is running.

42. A method performed by a radio access network node, comprising:
transmitting, in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling specifies a part of a plurality of connected mode discontinuous reception (CDRX) related timers,
the plurality of CDRX-related timers are used by a radio terminal to determine, during the ON duration in the current cell DTX cycle in the first serving cell, an active time for a CDRX group to which one or more serving cells including the first serving cell belong, based on whether any one of the plurality of CDRX-related timers is running, and
the Layer 1 or Layer 2 signaling causes the radio terminal to determine, during an extended ON duration in the current cell DTX cycle, the active time for the CDRX group based on whether any one of one or more timers specified by the Layer 1 or Layer 2 signaling is running.

43. A radio terminal comprising:
means for receiving, from a network, Layer 1 or Layer 2 signaling that triggers an extension of an ON duration of a current cell discontinuous transmission (DTX) cycle of cell DTX in a first serving cell; and
means for, if a connected mode discontinuous reception (CDRX) inactive timer for a CDRX group to which one or more serving cells including the first serving cell belong is not running, starting the CDRX inactive timer in response to receiving the Layer 1 or Layer 2 signaling.

44. The radio terminal according to claim 43, wherein the Layer 1 or Layer 2 signaling differs from a Physical Downlink Control Channel (PDCCH) that indicates a new uplink or downlink transmission.

45. The radio terminal according to claim 43, wherein the Layer 1 or Layer 2 signaling differs from a Physical Downlink Control Channel (PDCCH) that indicates a scheduling assignment of radio resources for uplink or downlink transmission.

46. The radio terminal according to any one of claims 44 to 45, further comprising means for starting an extended ON duration within the current cell DTX cycle after the ON duration based on the Layer 1 or Layer 2 signaling.

47. The radio terminal according to claim 46, wherein the Layer 1 or Layer 2 signaling indicates one or both of a length of the extended ON duration and an offset that defines a start point of the extended ON duration.

48. The radio terminal according to claim 46, wherein
the means for receiving is further adapted to receive configuration information for the cell DTX from the network via a radio terminal-specific or cell-specific Radio Resource Control (RRC) signaling, and
the configuration information indicates a length of the extended ON duration.

49. The radio terminal according to claim 46, wherein
the means for receiving is further adapted to receive configuration information for the cell DTX from the network via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

50. A radio access network node comprising:
means for transmitting, to a radio terminal in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling causes the radio terminal to, if a connected mode discontinuous reception (CDRX) inactive timer for a CDRX group to which one or more serving cells including the first serving cell belong is not running, start the CDRX inactive timer in response to receiving the Layer 1 or Layer 2 signaling.

51. The radio access network node according to claim 50, wherein the Layer 1 or Layer 2 signaling differs from a Physical Downlink Control Channel (PDCCH) that indicates a new uplink or downlink transmission.

52. The radio access network node according to claim 50, wherein the Layer 1 or Layer 2 signaling differs from a Physical Downlink Control Channel (PDCCH) that indicates a scheduling assignment of radio resources for uplink or downlink transmission.

53. The radio access network node according to any one of claims 50 to 52, wherein the Layer 1 or Layer 2 signaling causes the radio terminal to start an extended ON duration within the current cell DTX cycle after the ON duration based on the Layer 1 or Layer 2 signaling.

54. The radio access network node according to claim 53, wherein the Layer 1 or Layer 2 signaling indicates one or both of a length of the extended ON duration and an offset that defines a start point of the extended ON duration.

55. The radio access network node according to claim 53, wherein
the means for transmitting is further adapted to transmit configuration information for the cell DTX via a radio terminal-specific or cell-specific Radio Resource Control (RRC) signaling, and
the configuration information indicates a length of the extended ON duration.

56. The radio access network node according to claim 53, wherein
the means for transmitting is further adapted to transmit configuration information for the cell DTX via a radio terminal-specific or cell-specific Radio Resource Control (RRC) signaling,
the configuration information indicates a plurality of candidate values for a length of the extended ON duration, and
the Layer 1 or Layer 2 signaling specifies one of the plurality of candidate values.

57. A method performed by a radio terminal, comprising:
receiving, from a network, Layer 1 or Layer 2 signaling that triggers an extension of an ON duration of a current cell discontinuous transmission (DTX) cycle of cell DTX in a first serving cell; and
if a connected mode discontinuous reception (CDRX) inactive timer for a CDRX group to which one or more serving cells including the first serving cell belong is not running, starting the CDRX inactive timer in response to receiving the Layer 1 or Layer 2 signaling.

58. A method performed by a radio access network node, comprising:
transmitting, to a radio terminal in a first serving cell, Layer 1 or Layer 2 signaling that triggers an extension of an ON duration of a current cell discontinuous transmission (DTX) cycle of cell DTX in the first serving cell,
wherein the Layer 1 or Layer 2 signaling causes the radio terminal to, if a connected mode discontinuous reception (CDRX) inactive timer for a CDRX group to which one or more serving cells including the first serving cell belong is not running, start the CDRX inactive timer in response to receiving the Layer 1 or Layer 2 signaling.

59. A radio terminal comprising:
means for, if an uplink transmission on a radio resource permitted by a dynamic uplink grant received by the radio terminal in RRC_CONNECTED mode during an ON duration of an activated cell discontinuous reception (DRX) occurs during an off duration of the cell DRX following the ON duration, performing the uplink transmission in the off duration; and
means for stopping other uplink transmissions during the off duration, except for the uplink transmission based on the dynamic uplink grant, in a case where the radio terminal is in the RRC_CONNECTED mode.

60. The radio terminal according to claim 59, wherein
the uplink transmission based on the dynamic uplink grant includes a Physical Uplink Shared Channel (PUSCH) transmission on the radio resource dynamically allocated by the dynamic uplink grant, and
the other uplink transmissions include a PUSCH transmission on a radio resource that is semi-statically allocated by a configured grant.

61. A method performed by a radio terminal comprising:
if an uplink transmission on a radio resource permitted by a dynamic uplink grant received by the radio terminal in RRC_CONNECTED mode during an ON duration of an activated cell discontinuous reception (DRX) occurs during an off duration of the cell DRX following the ON duration, performing the uplink transmission in the off duration; and
stopping other uplink transmissions during the off duration, except for the uplink transmission based on the dynamic uplink grant, in a case where the radio terminal is in the RRC_CONNECTED mode.

62. A radio terminal comprising:
means for performing a plurality of types of uplink transmission in an ON duration within a current cell discontinuous reception (DRX) cycle of cell DRX in a serving cell;
means for receiving, from a network, Layer 1 and Layer 2 signaling that triggers an extension of the ON duration of the current cell DRX cycle; and
means for, during an extended ON duration in the current cell DRX cycle, performing only a part of the plurality of types of uplink transmission and stopping a remainder of the plurality of types of uplink transmission.

63. The radio terminal according to claim 62, wherein
the plurality of types of uplink transmission include transmission of a scheduling request, Physical Uplink Shared Channel (PUSCH) transmission based on a dynamic grant, PUSCH transmission based on a configured grant, and PUSCH retransmission, and
the part of the plurality of types of uplink transmission does not include at least one of transmission of a scheduling request, PUSCH transmission based on a dynamic grant, PUSCH transmission based on a configured grant, or PUSCH retransmission.

64. The radio terminal according to claim 62 or 63, wherein the Layer 1 or Layer 2 signaling is cell-specific.

65. A method performed by a radio terminal, comprising:
performing a plurality of types of uplink transmission in an ON duration within a current cell discontinuous reception (DRX) cycle of cell DRX in a serving cell;
receiving, from a network, Layer 1 and Layer 2 signaling that triggers an extension of the ON duration of the current cell DRX cycle; and
during an extended ON duration in the current cell DRX cycle, performing only a part of the plurality of types of uplink transmission and stopping a remainder of the plurality of types of uplink transmission.

66. A radio terminal comprising:
means for performing a plurality of types of uplink transmission in an ON duration within a current cell discontinuous reception (DRX) cycle of cell DRX in a serving cell;
means for receiving, from a network, Layer 1 and Layer 2 signaling that triggers an extension of the ON duration of the current cell DRX cycle and indicates one or more allowed types among the plurality of types of uplink transmission; and
means for, during an extended ON duration in the current cell DRX cycle, performing only the one or more types of uplink transmission indicated by the Layer 1 and Layer 2 signaling and stopping a remainder of the plurality of types of uplink transmission.

67. The radio terminal according to claim 66, wherein the plurality of types of uplink transmission include transmission of a scheduling request, Physical Uplink Shared Channel (PUSCH) transmission based on a dynamic grant, PUSCH transmission based on a configured grant, and PUSCH retransmission.

68. The radio terminal according to claim 66 or 67, wherein the Layer 1 or Layer 2 signaling is cell-specific.

69. A radio access network node comprising:
means for transmitting Layer 1 or Layer 2 signaling within a serving cell to trigger an extension of an ON duration of a current cell discontinuous reception (DRX) cycle of cell DRX in the serving cell, wherein
the Layer 1 or Layer 2 signaling indicates one or more allowed types among a plurality of types of uplink transmission that can be performed by a radio terminal within the ON duration, and
the Layer 1 or Layer 2 signaling causes the radio terminal to, during an extended ON duration in the current cell DRX cycle, perform only the one or more types of uplink transmission indicated by the Layer 1 and Layer 2 signaling and stop a remainder of the plurality of types of uplink transmission.

70. A method performed by a radio terminal, comprising:
performing a plurality of types of uplink transmission in an ON duration within a current cell discontinuous reception (DRX) cycle of cell DRX in a serving cell;
receiving, from a network, Layer 1 and Layer 2 signaling that triggers an extension of the ON duration of the current cell DRX cycle and indicates one or more allowed types among the plurality of types of uplink transmission; and
during an extended ON duration in the current cell DRX cycle, performing only the one or more types of uplink transmission indicated by the Layer 1 and Layer 2 signaling and stopping a remainder of the plurality of types of uplink transmission.

71. A method performed by a radio access network node, comprising:
transmitting Layer 1 or Layer 2 signaling within a serving cell to trigger an extension of an ON duration of a current cell discontinuous reception (DRX) cycle of cell DRX in the serving cell, wherein
the Layer 1 or Layer 2 signaling indicates one or more allowed types among a plurality of types of uplink transmission that can be performed by a radio terminal within the ON duration, and
the Layer 1 or Layer 2 signaling causes the radio terminal to, during an extended ON duration in the current cell DRX cycle, perform only the one or more types of uplink transmission indicated by the Layer 1 and Layer 2 signaling and stop a remainder of the plurality of types of uplink transmission.

72. A radio terminal comprising:
means for receiving from a network, via radio terminal-specific or cell-specific Radio Resource Control (RRC) signaling, a first configuration related to cell discontinuous transmission (DTX) and a second configuration related to cell discontinuous reception (DRX); and
means for determining a pattern of the cell DRX using the first configuration and the second configuration, wherein
the first configuration indicates a length of a cycle of the cell DTX and a length of an ON duration of the cell DTX,
the means for determining is adapted to recognize that a length of a cycle of the cell DRX and a length of an ON duration of the cell DRX are the same as the length of the cycle of the cell DTX and the length of the ON duration of the cell DTX, respectively, as indicated by the first configuration, and
the second configuration indicates an offset for a start slot of the ON duration of the cell DRX from a start slot of the ON duration of the cell DTX.

73. The radio terminal according to claim 72, further comprising means for extending the ON duration of the cell DRX in response to an extension of the ON duration of the cell DTX triggered by the network.

74. A method performed by a radio terminal, comprising:
receiving from a network, via radio terminal-specific or cell-specific Radio Resource Control (RRC) signaling, a first configuration related to cell discontinuous transmission (DTX) and a second configuration related to cell discontinuous reception (DRX); and
determining a pattern of the cell DRX using the first configuration and the second configuration, wherein
the first configuration indicates a length of a cycle of the cell DTX and a length of an ON duration of the cell DTX,
the determining comprises recognizing that a length of a cycle of the cell DRX and a length of an ON duration of the cell DRX are the same as the length of the cycle of the cell DTX and the length of the ON duration of the cell DTX, respectively, as indicated by the first configuration, and
the second configuration indicates an offset for a start slot of the ON duration of the cell DRX from a start slot of the ON duration of the cell DTX.

75. A radio terminal comprising:
means for receiving from a network, via radio terminal-specific or cell-specific Radio Resource Control (RRC) signaling, a first configuration related to cell discontinuous transmission (DTX) and a second configuration related to cell discontinuous reception (DRX); and
means for determining a pattern of the cell DRX using the first configuration and the second configuration, wherein
the first configuration indicates a length of a cycle of the cell DTX and a start slot of an ON duration of the cell DTX,
the means for determining is adapted to recognize that a length of a cycle of the cell DRX and a start slot of an ON duration of the cell DRX are the same as the length of the cycle of the cell DTX and the start slot of the ON duration of the cell DTX, respectively, as indicated by the first configuration, and
the second configuration indicates how much longer the ON duration of the cell DRX is than the ON duration of the cell DTX.

76. The radio terminal according to claim 75, further comprising means for extending the ON duration of the cell DRX in response to an extension of the ON duration of the cell DTX triggered by the network.

77. A method performed by a radio terminal, comprising:
receiving from a network, via radio terminal-specific or cell-specific Radio Resource Control (RRC) signaling, a first configuration related to cell discontinuous transmission (DTX) and a second configuration related to cell discontinuous reception (DRX); and
determining a pattern of the cell DRX using the first configuration and the second configuration, wherein
the first configuration indicates a length of a cycle of the cell DTX and a start slot of an ON duration of the cell DTX,
the determining comprises recognizing that a length of a cycle of the cell DRX and a start slot of an ON duration of the cell DRX are the same as the length of the cycle of the cell DTX and the start slot of the ON duration of the cell DTX, respectively, as indicated by the first configuration, and
the second configuration indicates how much longer the ON duration of the cell DRX is than the ON duration of the cell DTX.
